(19)

Europäisches
Patentamt
European
Patent Office
Office européen
des brevets

(11) **EP 2 423 343 A1**

(12) **EUROPEAN PATENT APPLICATION**
published in accordance with Art. 153(4) EPC

(43) Date of publication:
**29.02.2012 Bulletin 2012/09**

(21) Application number: **10767159.6**

(22) Date of filing: **23.04.2010**

(51) Int Cl.:
*C22C 29/16* (2006.01)    *C22C 1/05* (2006.01)

(86) International application number:
**PCT/JP2010/057247**

(87) International publication number:
**WO 2010/123104 (28.10.2010 Gazette 2010/43)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.04.2009 JP 2009105956**

(71) Applicant: **Kyocera Corporation
Kyoto-shi
Kyoto 612-8501 (JP)**

(72) Inventor: **OHTA, Mizuho
Kirishima-shi
Kagoshima 899-4396 (JP)**

(74) Representative: **HOFFMANN EITLE
Patent- und Rechtsanwälte
Arabellastraße 4
81925 München (DE)**

(54) **CERAMICS FOR DECORATIVE COMPONENT AND DECORATIVE COMPONENT USING SAME**

(57)    An object of the present invention is to provide ceramics for decorative component which have golden color tone and provide high-grade impression, aesthetic satisfaction and mind soothing effect, and also has small color difference and does not cause deterioration in beautiful appearance of the decorative surface, and a decorative component using the same. The ceramics for decorative component comprise a titanium nitride-based sintered body containing nickel, niobium, chromium and carbon, and are **characterized in that** a content of carbon on a decorative surface is not less than 0.4% by mass and not more than 0.9% by mass, and the decorative surface does not substantially contain aluminum. Since the decorative surface does not substantially contain aluminum, a preferable golden color can be provided, and an adhesion of silver-white spot-like foreign matters on the decorative surface is less likely to occur as a result of bonding of aluminum to the above metal component. Therefore, deterioration in beautiful appearance of the decorative surface is less likely to occur.

Fig. 1

(a)

(b)

**Description**

Technical Field

The present invention relates to ceramics for decorative component that produce golden color of beautiful color tone, and a decorative component using the same.

Background Art

Heretofore, decorative components of watch and decorative components of accessory that show golden color have been made from gold or an alloy thereof, or by plating various metals from the viewpoint of color tone and corrosion resistance.

However, gold, alloys thereof and plated metallic materials are all low in hardness, and therefore have such a problem that contact with a hard object results in scratch or deformation on the surface. Various ceramics for decorative components have recently been proposed to solve this problem.

Patent Document 1 discloses, for example, a sintered alloy (ceramics for decorative component) which contains 45 to 75% by weight of titanium nitride and 7.5 to 25% by weight of titanium carbide as a hard phase, 1 to 10% by weight of chromium in terms of equivalent carbide, 0.1 to 5% by weight of molybdenum in terms of equivalent carbide and 5 to 20% by weight of nickel based on the total amount as a binder phase, and also has a lightness index $L^*$ in a range from 65 to 69, $a^*$ in a range from 4 to 9 and $b^*$ in a range from 5 to 16 in the $L^*a^*b^*$ color space as measured with a colorimeter.

Patent Document 2 discloses a sintered alloy for decoration (ceramics for decorative component) consisting of 70 to 98% by weight of a hard phase represented by the formula (A):

$$(Ti_a, M_b)(N_w, C_x, O_y)Z \qquad (A)$$

where M represents at least one kind selected from among Zr, Hf, V, Nb, Ta and Cr;
$a + b = 1, 1 \geq a \geq 0.4, 0.6 \geq b \geq 0$;
$W + X + Y = 1, X + Y > 0, 1 > W \geq 0.4$
$0.19 \geq X \geq 0, 0.6 \geq Y \geq 0, 0.93 \geq Z \geq 0.6$;

2 to 30% by weight of a binder phase of at least one kind selected from among Fe, Ni, Co, Cr, Mo and W; and inevitable impurities.

Patent Document 3 discloses a sintered alloy for decoration (ceramics for decorative component) consisting of 2 to 30% by weight of a binder phase of at least one kind selected from among Fe, Ni, Co, Cr, Mo and W, 0.1 to 10% by weight of a reinforcement phase constituted from a metal of at least one kind selected from among P, Al, B, Si, Mn, Ti, Zr, Hf, V, Nb and Ta, an alloy or an oxide of Al, Y, Zr, Mg, Ni and Si, a nitride of Al, Si and B, a carbide of Mo, or a compound of at least one kind of a mutual solid solution thereof, remainder of a hard phase represented by the formula (A) below and inevitable impurities:

$$(Ti_a, M_b)(N_w, C_x, O_y)Z \qquad (A)$$

where M represents at least one kind selected from among Zr, Hf, V, Nb, Ta and Cr;
$a + b = 1, 1 \geq a \geq 0.4, 0.6 \geq b \geq 0$;
$W + X + Y = 1, X + Y > 0, 1 > W \geq 0.4$
$0.5 \geq X \geq 0, 0.6 \geq Y \geq 0.06, 0.93 \geq Z \geq 0.6$.

Patent Documents 2 and 3 disclose a sintered alloy for decoration (ceramics for decorative component) which maintains golden color tone by means of the hard phase constituted mainly from $TiN_z$ ($0.6 \leq Z \leq 0.95$). These documents describe that the color tone shifts from golden color tone to pale golden color as the value of Z becomes lower than the value of the stoichiometrical composition, and that the color tone can be easily controlled in a range from deep and pale golden color to vivid golden color, by adding TiO, ZrN, HfN, VN, NbN, TaN, CrN, $Cr_2N$, TaC and NbC that shows golden color to the sintered alloy.

Patent Document 4 discloses ceramics for decorative component, which contain titanium nitride as the main component, nickel as an auxiliary component and at least one kind selected from among vanadium nitride, niobium nitride, tantalum nitride, molybdenum carbide, niobium carbide, tungsten carbide and tantalum carbide as an additive component, and also has an arithmetic mean height Ra of at least not more than 0.03 $\mu$m of the decorative surface, a lightness index $L^*$ in a range from 72 to 84 and chromaticness indices $a^*$ and $b^*$ in ranges from 4 to 9 and from 28 to 36, respectively, in the $L^*a^*b^*$ color space of CIE1976 of the above decorative surface.

Patent Document 1: JP-A-2003-13154
Patent Document 2: JP-A-58-204149
Patent Document 3: JP-A-58-204150
Patent Document 4: Description of EP-A-1 767 661

Disclosure of the Invention

Problems to be Solved by the Invention

However, although the sintered alloy (ceramics for decorative component) described in Patent Documents 1 to 4 has excellent corrosion resistance without the possibility of the surface coat to peel off because it is sintered body, the sintered alloy has color tone that is somewhere between a combination of silver and violet and a combination of silver and pink, and does not have golden color tone.

Patent Document 2 and 3 disclose color tone from deep and pale golden color to vivid golden color that produces by the addition of TiO, ZrN, HfN, VN, NbN, TaN, CrN, $Cr_2N$, TaC and NbC. However, since the disclosed sintered alloy for decoration (ceramics for decorative component) can adapt a wide range of the proportion of carbon that exerts an influence on mechanical properties such as hardness and toughness, and color difference which is a difference in sense of color tone generated between decorative components, there was a problem that decorative components having low mechanical properties appear and a color difference between decorative components is large.

Patent Document 4 discloses ceramics for decorative component that can provide high-grade impression, aesthetic satisfaction and mind soothing effect, and also develops golden color that has recently become highly popular in the market. However, a proportion of carbon is not controlled in the ceramics for decorative component and, similarly to the above case, decorative components having low mechanical properties may appear and a color difference between decorative components may increase.

Furthermore, in the firing step of the ceramics for decorative component disclosed in Patent Documents 1 to 4, since a powder of aluminum oxide having comparatively low melting point, that is a material of a spreading powder used upon firing, is used as a spreading powder for firing, aluminum oxide may partially vaporized during firing. As a result, aluminum oxide vaporizes and decomposes into aluminum that is bonded to form impurities, and the obtained impurities adheres on a surface of the ceramics for decorative component as silver-white spot-like foreign matters, and thus beautiful appearance may deteriorate. There was also a problem that, when aluminum is solid-soluted in crystal grains of titanium nitride or solid-soluted to cause precipitation, foreign matters cannot be removed even by polishing and thus beautiful appearance does not deteriorate.

The present invention has been made so as to solve the above problems and an object thereof is to provide ceramics for decorative component which have golden color tone and provide high-grade impression, aesthetic satisfaction and mind soothing effect, and also has small color difference and does not cause deterioration in beautiful appearance of the decorative surface, and a decorative component using the same.

Means for Solving the Problems

The ceramics for decorative component of the present invention comprise a titanium nitride-based sintered body containing nickel, niobium, chromium and carbon, wherein a content of carbon of the decorative surface is not less than 0.4% by mass and not more than 0.9% by mass, and the decorative surface does not substantially contain aluminum.

The decorative component for a watch of the present invention comprises the ceramics for decorative component of the present invention with any one of the above constitutions.

Effects of the Invention

According to the ceramics for decorative component of the present invention, it is formed from a titanium nitride-based sintered body containing nickel, niobium, chromium and carbon and the content of carbon on the decorative surface is not less than 0.4% by mass and not more than 0.9% by mass, and the decorative surface does not substantially contain aluminum, and thus preferable golden color can be provided. Adhesion of silver-white spot-like foreign matters on the decorative surface is less likely to occur as a result of bonding of aluminum to the above metal component, and thus deterioration in beautiful appearance of the decorative surface is less likely to occur. Furthermore, since carbon diffuses into titanium nitride to form a solid solution, thereby promoting sintering, mechanical properties such as hardness and toughness can be improved, and also developed black color of carbon may cause realization of slight achromatic color thereby making it possible to suppress color unevenness and decreasing a color difference ($\Delta E^*ab$) which is a difference in sense of color tone. Therefore, the user is less likely to feel a difference in sense of color tone generated between decorative components.

According to the decorative component for watch of the present invention, since it is possible to obtain mind soothing effect through visual sense, such as high-grade impression or aesthetic satisfaction, by constituting from the ceramics for decorative component of the present invention, the decorative component for watch can be suitably used for a watch that requires visual beautiful appearance together with functions.

Brief Description of the Drawings

Fig. 1 is a perspective view showing an example of a watch case that is a decorative component for watch of the present embodiment, in which Fig. 1(a) is a perspective view of the watch case as seen from the front surface, and Fig. 1(b) is a perspective view of the watch case of Fig. 1(a) as seen from the back surface.

Fig. 2 is a perspective view showing another aspect of a watch case that is a decorative component for watch of the present embodiment.

Fig. 3 is a schematic view showing an example of the constitution of a watch band that is a decorative component for watch of the present embodiment.

Fig. 4 is a perspective view showing an example of a mobile phone that uses a decorative component for mobile terminal of the present embodiment.

Fig. 5 is a perspective view showing the mobile phone of the example shown in Fig. 4 in a state of chassis opened.

Fig. 6 is a perspective view showing an example of a note-type personal computer that is another aspect of a decorative component for mobile terminal of the present embodiment.

Fig. 7 is a schematic view showing an example of the constitution of a soap case that is a decorative component for daily life articles of the present embodiment.

Fig. 8 is a perspective view showing a coffee cup set that is another aspect of a decorative component for daily life articles of the present embodiment.

Fig. 9 is a perspective view showing an example of a vehicle body having a decorative component for vehicle parts of the present embodiment mounted thereon.

Fig. 10 is a front view showing an example of a corner pole that uses a decorative component for vehicle supplies of the present embodiment.

Fig. 11 is a front view showing an example of a golf club that uses a decorative component for sports goods of the present embodiment.

Fig. 12 is a bottom view showing an example of spiked shoes that uses a decorative component for sports goods of the present embodiment.

Fig. 13 is a perspective view showing an example of a guitar that uses a decorative component for musical instrument of the present embodiment.

Fig. 14 is a schematic view showing an example of an artificial dental crown that uses a decorative component for accessory of the present embodiment.

Fig. 15 is a front view showing an example of an earphone unit that uses a decorative component for accessory of the present embodiment.

Fig. 16 is a perspective view showing an example of eyeglasses that uses a decorative component for accessory of the present embodiment.

Fig. 17 is a perspective view showing an example of a grip for a door handle that uses a decorative component for architectural members of the present embodiment. Description of Reference Numerals

| | |
|---|---|
| 10A, 10B: | Watch case |
| 11: | Recess |
| 12: | Protrusion |
| 13: | Bottom |
| 14: | Wall |
| 15: | Hole |
| 20: | Inner link |
| 21: | Through hole |
| 30: | Outer link |
| 31: | Pin hole |

| 40: | Pin |
| 50: | Watch band |
| 60: | Mobile phone |
| 80: | Note-type personal computer |
| 90: | Soap case |
| 100: | Coffee cup set |

Best Mode for Carrying Out the Invention

Best mode for carrying out the invention will be described below.

The ceramics for decorative component of the present embodiment are formed from a titanium nitride-based sintered body containing nickel, niobium, chromium and carbon.

In the present embodiment, the titanium nitride-based sintered body is a sintered body that contains titanium nitride (TiN) as a main component. The main component as used herein refers to a component that occupies not less than 50% by mass based on 100% by mass of the all components that constitute the ceramics for decorative component. Titanium nitride used as the main component has a feature that golden color that is suitable for decorative items, and shows high mechanical properties such as hardness and toughness. Therefore, it is preferable that the ceramics for decorative component of the present embodiment formed from titanium nitride-based sintered body contain not less than 70% by mass of titanium nitride.

Nickel is high in malleability and serves as a binder that bonds the crystal grains of titanium nitride that is the main component, and nickel compounds having compositions such as $TiNi_3$ or $Ti_2Ni_2$, besides metallic nickel, may be included. Niobium serves as a color regulating agent, and niobium compounds having compositions such as $NbNi_3$ or $NbC$, besides metallic niobium, may be included. Chromium bonds with oxygen contained in the air to form a dense oxide film on the decorative surface, and thus making it possible to improve corrosion resistance. Carbon content can improve mechanical properties such as hardness and toughness.

It is important that the ceramics for decorative component of the present embodiment are formed from a titanium nitride-based sintered body containing nickel, niobium, chromium and carbon, and the content of carbon of the decorative surface is not less than 0.4% by mass and not more than 0.9% by mass and the decorative surface does not substantially contain aluminum. When the decorative surface of the titanium nitride-based sintered body having the constitution described above contains carbon in the content within this range, carbon diffuses into titanium nitride to form a solid solution, resulting in acceleration of sintering, and thus it is possible to enhance mechanical properties such as hardness and toughness. Also, carbon exerts an influence on a color difference ($\Delta E^*ab$) which is a difference of a chromaticness index a* and sense of color tone defined by the formula (A) as shown below. When carbon is contained in the amount within this range, black color developed by carbon causes realization of slight achromatic color, thereby making it possible to suppress color unevenness. Therefore, it becomes possible to develop preferable golden color that makes the user to scarcely feel a color difference generated between decorative components.

$$\Delta E^*ab = ((\Delta L^*)^2 + (\Delta a^*)^2 + (\Delta b^*)^2)^{1/2} \qquad (A)$$

When the content of carbon is less than 0.4% by mass, mechanical properties such as hardness and toughness cannot be made sufficiently high and black color developed by carbon may scarcely cause realization of slight achromatic color and color difference ($\Delta E^*ab$) may increase. In contrast, when the content of carbon is more than 0.9% by mass, although mechanical properties such as hardness and toughness become high, the color tone may become reddish, and thus it is less likely to develop golden color that provides decorative values such as high-grade impression, aesthetic satisfaction and mind soothing effect to the user.

The content of carbon may be measured using an analytical method of carbon.

When the decorative surface does not substantially contain aluminum, adhesion of silver-white spot-like foreign matters on the decorative surface is less likely to occur as a result of bonding of aluminum to the above metal component, and thus deterioration in beautiful appearance of the decorative surface scarcely occurs.

The state where the decorative surface does not substantially contain aluminum refers to a state where the content of aluminum of the entire decorative surface is not more than 0.1% by mass, and the content of aluminum may be measured by an inductively coupled plasma (ICP) emission spectrometry.

The beautiful appearance of the decorative surface is also influenced by a lattice constant of crystal grains of titanium nitride of the decorative surface, and it is suitable that the lattice constant of crystal grains of titanium nitride of the decorative surface is not less than 0.4242 nm and not more than 0.4252 nm. When the lattice constant is in this range, since the lattice constant of crystal grains of titanium nitride is restricted to around 0.4242 nm which is a theoretical value of the lattice constant, impurities such as carbon and oxygen can be scarcely solid-soluted in titanium nitride. Therefore, deterioration of beautiful appearance of the decorative surface may further decrease. The theoretical value of the lattice constant of crystal grains of titanium nitride is 0.4242 and the lattice constant scarcely becomes the value which is smaller than 0.4242 nm.

The lattice constant of crystal grains of titanium nitride of the decorative surface is determined using a high-resolution x-ray diffraction method.

Specifically, the lattice constant can be determined by the following procedure: ceramics for decorative component are irradiated with $CuK_{\alpha 1}$ characteristic X-ray and scanning is performed at a step of 0.008° in a range where a diffraction angle (2θ) satisfies a relation: 20° ≤ 2θ ≤ 110° to obtain an X-ray diffraction pattern, and then the pattern is analyzed by a Rietveld method using RIETAN-2000 program (produced by Mr. Fujio Izumi: F. Izumi and T. Ikeda, Mater. Sci. Forum, 321-324 (2000) 198).

As described above, when analysis is performed by the Rietveld method using RIETAN-2000, since the lattice constant varies depending on a peak shape of an X-ray diffraction pattern from each crystal plane of crystal grains of titanium nitride, the peak shape may be limited using Toratani's division pseudo-voigt function.

To make the ceramics for decorative component having golden color that provide decorative values such as high-grade impression, aesthetic satisfaction and mind soothing effect to the user as described above, it is preferable that the arithmetic mean height Ra of the decorative surface is not more than 0.03 μm, and the decorative surface has such a color tone that the lightness index L* is not less than 72 and not more than 84 in the L*a*b* color space of CIE1976, a chromaticness index a* is not less than 3 and not more than 9 in the L*a*b* color space of CIE1976, and a chromaticness index b* is not less than 27 and not more than 36 in the L*a*b* color space of CIE1976.

As used herein, the lightness index L* in the L*a*b* color space of CIE1976 of the decorative surface indicates a degree of lightness or darkness of a color tone, while a higher value of the lightness index L* means lighter color tone and a lower value of the lightness index L* means darker color tone. The chromaticness index a* represents the ratio of red to green of color tone. A larger positive value of chromaticness index a* means red color, and a smaller absolute value of chromaticness index a* means dull color tone without clearness, while a negative chromaticness index a* having a larger absolute value means green color. The chromaticness index b* represents the ratio of yellow to blue of color tone. A larger positive value of chromaticness index b* means yellow color tone, and a smaller absolute value of b* means dull color tone without clearness, while a negative chromaticness index b* having a larger absolute value means blue color.

Since the arithmetic mean height Ra of the decorative surface exerts an influence on reflectivity of light to cause a change in color tone, the arithmetic mean height Ra of the decorative surface is preferably not more than 0.03 μm. This increases reflectivity of light, and increases the value of the lightness index L*. When the arithmetic mean height Ra of the decorative surface is more than 0.03 μm, the value of the lightness index L* decreases to produce dark color tone, and the high-grade impression may be impaired.

This light is a bundle of visible ray having a wavelength of 380 to 780 nm and spectroscopes visible ray, thereby acting so as to decrease refection of light having a wavelength range from 450 to 500nm which develops blue color and to increase refection of light having a wavelength range from 570 to 590 nm which develops yellow color, by adjusting the arithmetic mean height Ra to not more than 0.03 μm. Therefore, it is possible to develop golden color which provides high-grade impression, aesthetic satisfaction and mind soothing effect. It is particularly preferred that reflectivity of the decorative surface to light having a wavelength in a range from 570 to 700 nm is not less than 50%.

The arithmetic mean height Ra may be measured in accordance with JIS B 0601-2001. When measuring with a contact probe type surface roughness meter with the measurement length and the cut-off point being set to 5 mm and 0.8 mm, respectively, for example, a stylus having a tip radius of 2 μm may be put into contact with the decorative surface of the ceramics for decorative component, and scanned at a speed of 0.5 mm/sec. The arithmetic mean height Ra of the decorative surface is the average of values measured at 5 points.

The value of the lightness index L* is controlled to not less than 72 and not more than 84 since it is possible to give the proper lightness to golden color tone. The value of chromaticness index a* is controlled to not less than 3 and not more than 9 since it is possible to suppress red color with keeping a brightness of color tone high and the value of chromaticness index b* is controlled to not less than 27 and not more than 36 since it is possible to produce golden color with keeping a brightness of color tone high. It is particularly preferred that the value of chromaticness index I* is controlled to not less than 72 and not more than 79.

It is preferable that the decorative surface of the ceramics for decorative component of the present embodiment have an open void ratio of the decorative surface of not more than 2.5%. The open void ratio of the decorative surface exerts an influence particularly on the value of the lightness index L*. A higher open void ratio results in a lower value of the lightness index L*, and a lower open void ratio results in a higher value of the lightness index L*. By controlling the open void ratio of the decorative surface to not more than 2.5%, it is possible to control the lightness index L* to not less than 77, thus resulting in color tone that is more loved by people. It is more preferable to control the lightness index L* to not less than 78, in which case it is preferable to control the open void ratio of the decorative surface to not more than 1.1%.

The open void ratio of the decorative surface can be determined as follows. First, an image of the decorative surface is captured by a CCD camera using a metallurgical microscope at a magnification of 200 times. Then, the area of open voids in the total measuring area is determined with the measuring area of one field of view in the image being set to $2.25 \times 10^{-2} = mm^2$ and the number of fields of view set to 20, namely, the total measuring area of $4.5 \times 10^{-1}$ mm$^2$, using an image analyzer (LUZEX-FS manufactured by Nireco). The area of the open voids is divided by the total measuring area and the ratio of the area of open voids to the total measuring area is regarded as the open void ratio of the decorative surface. Whereby, the open void ratio of the decorative surface can be calculated.

The decorative surface of the ceramics for decorative component of the present embodiment refers only to a surface of a decorative component which is required to have decorative value, and does not mean the entire surface. In case that the ceramics for decorative component of the present embodiment are used in a watch case, for example, the outside surface of the watch case is subjected to aesthetic evaluation and is required to have decorative value, and is therefore referred to as the decorative surface.

The values of the lightness index L* and the chromaticness indices a* and b* in the L*a*b* color space of CIE1976 of the decorative surface can be determined by the procedure specified in JIS Z 8722-2000. For example, a spectrocolorimeter (CM-3700d manufactured by Konica Minolta Holdings Inc., etc.) may be used in combination with CIE standard light source of D65 with view angle being set to 10° and the measurement area set to 5 mm by 7 mm. In the ceramics for decorative component of the present embodiment, an intermetallic compound composed of nickel and either one of niobium and titanium is preferably contained in the decorative surface. When the intermetallic compound is contained in the decorative surface, since the value of the lightness index L* of the decorative surface increases, the impression of noble lightness is produced. Such the intermetallic compound is, for example, a component with a composition formula of $TiNi_3$, $Ti_2Ni$ or $NbNi_3$, and can be identified by an X-ray diffraction method.

It is preferred that the titanium nitride-based sintered body satisfies $0.8 \leq x \leq 0.96$ when the composition of the titanium nitride-based sintered body is represented by $TiN_x$. As will be described hereinafter, color tone is influenced by the value of atomicity x in the composition formula of $TiN_x$. As the value of atomicity x becomes smaller, the color tone changes from golden color to pale golden color. As the value of atomicity x becomes larger, the color tone changes to dull and deep golden color. Accordingly, the value of atomicity x in the composition formula $TiN_x$ is preferably not less than 0.8 and not more than 0.96 from such a point of view. When the value of atomicity x is within this range, lustrous color tone is enhanced, so that higher high-grade impression and higher aesthetic satisfaction can be provided.

Titanium nitride can be substituted by or react with oxygen and carbon contained in the degreasing atmosphere or firing atmosphere, and turn to titanium oxide-carbide-nitride (TiCNO). Therefore, the value of atomicity x as assumed that a titanium nitride sintered body has the composition formula of $TiN_x$ can be determined as follows by using an oxygen-nitrogen analyzer and a carbon analyzer. Specifically, after measuring the contents of oxygen, nitrogen and carbon in the titanium nitride-based sintered body with these analyzers, titanium content is determined by subtracting the contents of oxygen, nitrogen and carbon from 100% by mass. Since titanium content and nitrogen content divided by the respective atomic weights give the number of moles of the respective elements contained, the value of atomicity x is the ratio of the number of moles of nitrogen to the number of moles of titanium.

It is preferable that in the ceramics for decorative component of the present embodiment, a content of nickel is not less than 7% by mass and not more than 14.5% by mass, and a content of niobium is not less than 2.5% by mass and not more than 10% by mass.

Nickel is high in malleability and serves as a binder that bonds the crystal grains of titanium nitride that is the main component, and is therefore preferably added in a large quantity. However, too high content of nickel based on 100% by mass of all components that constitute the ceramics for decorative component that is put on a human body may cause nickel to react with sweat and elute, thus changing the color of the ceramics for decorative component from golden color that provides decorative values such as high-grade impression, aesthetic satisfaction and mind soothing effect to the user. In addition, the chromaticness index a* in the L*a*b* color space of CIE1976 becomes higher, although both the lightness index L* and the chromaticness index b* become lower. Thus, the nickel content is preferably not less than 7% by mass and not more than 14.5% by mass. In case that the ceramics for decorative component are used in articles that are put on human bodies such as watch case or links of band, in particular, the nickel content is more preferably not less than 7% by mass and not more than 10% by mass.

The reason for setting the niobium content to not less than 2.5% by mass and not more than 10% by mass is that niobium serves as a color tone regulating agent that increases the lightness index L* by forming a solid solution with titanium nitride or melting inside nickel, but may make it difficult to sinter since covalency is strong when niobium content is too high.

It is more preferable that the niobium content is not less than 3% by mass and not more than 8% by mass. This is because niobium has the effect of suppressing crystal grains from growing and thereby increasing the crystal boundaries, so that the incident light is significantly influenced by mirror reflection caused by the crystal that forms the decorative surface and by the dispersive reflection caused by the crystal boundaries, thus resulting in higher lightness index L* of the decorative surface. In addition, high synergy effect of the color tone enhances the lustrous color tone and provides high-grade impression and aesthetic satisfaction, thereby achieving mind soothing effect through visual sense.

Meanwhile, light is reflected generally through mirror reflection and dispersive reflection. Mirror reflection in the present invention refers to a case where the angle of incidence of light onto mirror-smooth decorative surface, or microscopically onto the crystal that forms the decorative surface, and the angle of reflection therefrom are equal. Dispersive reflection refers to a case where light that has entered in the crystal boundary undergoes random reflections repeatedly before exiting to the outside.

Surface roughness of the crystal that forms the decorative surface can be adjusted by barrel polishing operation described hereinafter. When surface roughness of the crystal surface which does not include crystal boundaries as observed by an atomic force microscope is controlled to 0.001 to 0002 $\mu$m in terms of the arithmetic mean height Ra, reflection on the crystal surface tends to partially change from mirror reflection to dispersive reflection, so that chromaticness index b* of the decorative surface can be increased to not less than 32. That is preferable since vivid golden color is developed.

It is preferable that in the ceramics for decorative component of the present embodiment, a content of chromium is not less than 1.5% by mass and not more than 6.5% by mass. Chromium bonds with oxygen contained in the air to form a dense oxide film on the decorative surface, so as to improve corrosion resistance. Moreover, when nickel forms grain boundaries that bond with titanium nitride in the state of nickel surrounding chromium, nickel and chromium form nickel-chromium compound so as to suppress nickel from being ionized and eluting. However, since chromium content affects the color clearness, it is preferable to contain not less than 1.5% by mass and not more than 6.5% by mass of chromium in order to suppress nickel from eluting while achieving corrosion resistance and clearness at the same time.

The state of nickel surrounding chromium refers to the state of chromium being surrounded by crystal boundary phase without making contact with titanium nitride crystal. This state can be confirmed by comparing an image of the decorative surface captured by a scanning electron microscope and an image of the decorative surface that shows the distribution of nickel and chromium detected by energy dispersion type (EDS) X-ray microanalyzer.

In the ceramics for decorative component of the present embodiment, it is preferred the titanium nitride-based sintered body contains an intermetallic compound composed of chromium and nickel. Since chromium and nickel are magnetic substances, whereas, this intermetallic compound is a non-magnetic substance, even if the ceramics for decorative component are used for a decorative component for a watch and a decorative component for mobile terminal, it scarcely exerts an influence of magnetism. Such the intermetallic compound is, for example, a component having a composition formula of $Cr_2Ni_3$ or $Cr_3Ni_2$ and can be identified by X-ray diffraction method.

Contents of titanium, nickel, niobium and chromium can be measured by fluorescence X-ray analysis (XRF). Specifically, at least two samples of powder mixture of titanium nitride, nickel, niobium and chromium with different concentrations are prepared in advance, and are molded by a pressing method to make standard sample. The standard samples are irradiated with X rays, and calibration curves are drawn by applying the least squares method to the relation between the intensities of fluorescence X rays and known concentrations. Then the ceramics for decorative component of the present embodiment are ground into powder and are molded by a pressing method to make a measurement sample. The measurement sample is irradiated with X rays, and the intensity of fluorescence X ray is measured so as to determine the concentration from the calibration curve. Nitrogen can be measured by using an oxygen-nitrogen analyzer, and carbon can be measured by using a carbon analyzer.

The decorative component for watch of the present embodiment has a feature that it is constituted from the ceramics for decorative component with the above constitution of the present embodiment, and examples thereof include watch case, and links of watchband.

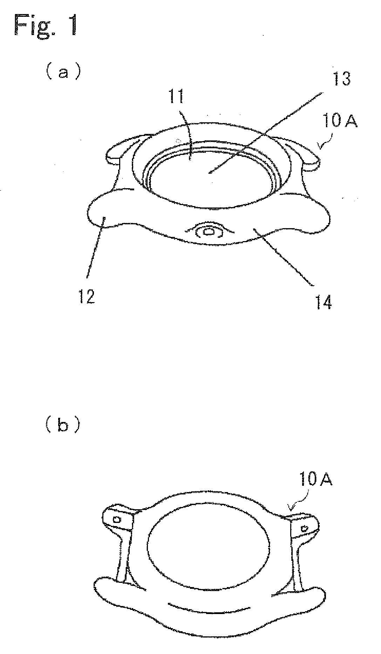

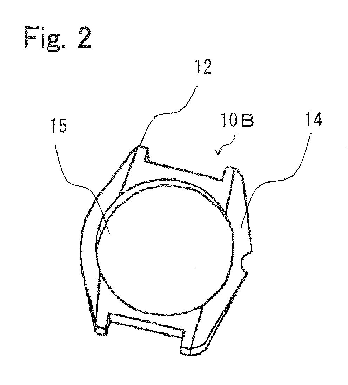

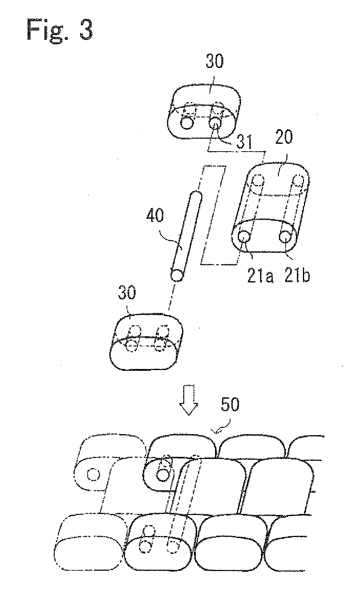

Fig. 1 shows an example of a watch case that is a decorative component for watch of the present embodiment, Fig. 1(a) is a perspective view of the front surface of the watch case, and Fig. 1(b) is a perspective view of the back surface of the watch case of Fig. 1(a). Fig. 2 is a perspective view showing another aspect of the watch case that is the decorative component for watch of the present embodiment. Fig. 3 is a schematic diagram showing an example of constitution of the watchband that is the decorative component for watch of the present embodiment. Identical members are denoted with the same reference numeral in these drawings.

A watch case 10A shown in Figs. 1(a) and 1(b) has a recess 11 that houses a movement (drive mechanism, not shown), and protrusions 12 which engage a watchband (not shown) so as to wear the watch on a wrist, where the recess 11 is constituted from a thin bottom 13 and a thick wall 14. The watch case 10B as shown in Fig. 2 has a recess 15 that accommodates a movement (drive mechanism, not shown), and protrusions 12 formed on the wall 14 for engaging a watchband (not shown) so as to wear the watch on a wrist.

The band links that constitute the watchband 50 as shown in Fig. 3 include inner links 20 each having through hole 21 into which a pin 40 is inserted and outer links 30 which are disposed to sandwich the inner link 20 and each having pin holes 31 in which the both ends of the pin 40 are inserted. The inner link 20 and the outer links 30 are sequentially linked with each other by inserting the pin 40 into the through hole 21 of the inner link 20, and engaging the both ends of the inserted pin 40 in the pin holes 31 of the outer links 30, thereby to assemble the watchband 50.

The decorative component for watch of the present embodiment used in the watch cases 10A, 10B and the band links that constitute the watchband 50 are formed from the ceramics for decorative component of the present embodiment, and therefore provide high-grade impression and aesthetic satisfaction for watch, and achieves mind soothing effect through visual sense.

The ceramics for decorative component of the present embodiment preferably have Vickers hardness (Hv) of not less than 8 GPa of the decorative surface, since the level of Vickers hardness (Hv) of the decorative surface is one of factors that affect the long-term reliability. When Vickers hardness (Hv) is controlled within the above range, the decorative surface is less likely to be mechanically impaired even when put into contact with hard substances such as ducts made from glass or metallic particles. Vickers hardness (Hv) of the decorative surface may be measured in accordance with JIS R 1610-2003.

It is preferable that the decorative surface has higher fracture toughness, since fracture toughness affects the wear resistance of the decorative surface. The ceramics for decorative component of the present embodiment preferably have fracture toughness of not less than 4 $MPa \cdot m^{1/2}$. The fracture toughness can be measured in accordance with indentation-fracture method (IF method) in accordance with JIS R 1607-1995.

In case that the ceramics for decorative component are applied to an article that is worn by a person, the lighter the weight, the more it is preferred. Therefore, it is preferable that apparent density of the ceramics for decorative component of the present embodiment is not more than 6 $g/cm^3$ (excluding 0). The apparent density may be measured in accordance with JIS R 1634-1998. When the ceramics for decorative component are used to form the inner links 20 that are part of the links of watch band, the inner links 20 are frequently subjected to tensile load. Therefore, it is preferable that the ceramics for decorative component of the present embodiment have a tensile strength of not less than 196 N (Newton). The tensile strength may be measured by inserting pins (not shown) that is made of a cemented carbide and is longer than the through hole 21 into the through holes 21a, 21b of the inner link 20, pulling the pin in the opposite direction and reading the load applied when the inner link 20 is ruptured on a load cell. When the ceramics for decorative component are used to form a watch case or links of watch band, it is preferable that the proportion of the ferromagnetic metal, such as cobalt (Co), that has mass susceptibility of not less than 162 $G \cdot cm^3/g$ is preferably 0.1% by mass in total based on 100% by mass of the ceramics for decorative component, when adverse effect to the movement (drive mechanism) that is not shown is taken into consideration. The proportion of the ferromagnetic metal can be determined by inductivity coupled plasma (ICP) emission spectroscopy.

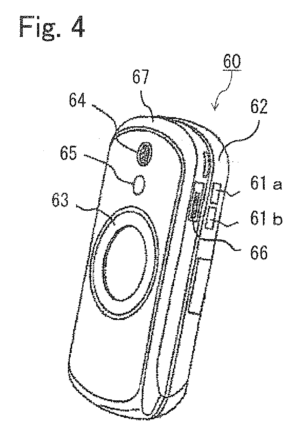

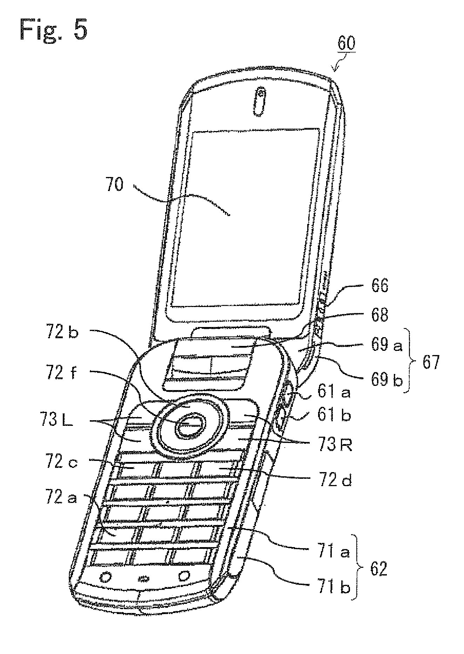

Fig. 4 is a perspective view showing an example of mobile phone that uses a decorative component for mobile terminal of the present embodiment. Fig. 5 is a perspective view showing the mobile phone shown in Fig. 4 in a state of chassis opened.

It is preferred that the decorative component for mobile terminal of the present embodiment is formed from the ceramics for decorative component of the present embodiment, and specific examples thereof include various control keys, cases and switches of the mobile phone of the examples shown in Figs. 4 and 5.

The mobile phone 60 of the example shown in Fig. 4 includes a mode key 61a for changing the mode of the mobile phone 60 to a radio mode for listening to radio broadcast, a music mode for listening to music and the like, and a silencer key 61b for putting the mobile phone 60 into silent mode which are provided on a first chassis 62, and includes a touch sensor 63 for entering commands by inspecting touch with a finger or other object thereon, a camera 64 for capturing an image, a light 65 and a slide switch 66 for setting enabling or disabling the entry through the touch sensor 63 and the like provided on a second chassis 67.

Fig. 5 shows an example of the mobile phone 60 in a state where the second chassis 67 is opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also includes a front case 71a and a rear case 71b, while various control keys are provided on the front case 71a. The control keys include numeric keys 72a for entering telephone numbers, cursor movement keys 72b for moving the cursor over a menu of various functions, a talk key 72c to be pressed to start talking when receiving a call, a power/hang up key 72d for turning the power on or off and hanging up the line to end talking, function keys 73L, 73R disposed on the left and right sides of a center key 72f which is disposed at the center of the cursor movement key 72b, etc.

When at least one of the front cases 69a and 71a and the rear cases 69b and 71b as the above cases, the numeric keys 72a, the cursor movement keys 72b, the talk key 72c, the power/hang up key 72d, the center key 72f, the function keys 73L and 73R, etc. as the operation keys is formed from the ceramics for decorative component of the present embodiment, high-grade impression, aesthetic satisfaction and mind soothing effect are provided to the user over a long period of time, and to make the user to feel satisfaction through procession of the note-type personal computer 60 that has such color tone. Also since the ceramics for decorative component of the present embodiment have favorable property for color coordination, it is capable of satisfying the requirements of diverse users by combining with members of various color tones.

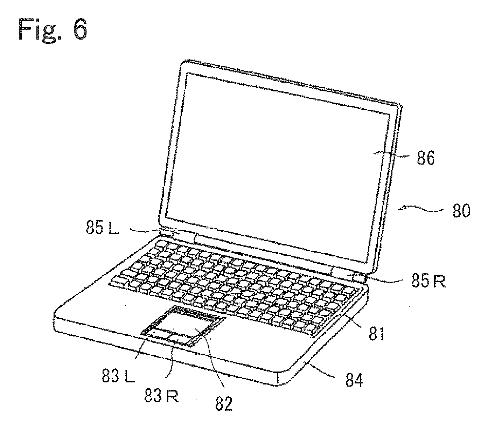

Fig. 6 is a perspective view showing another aspect of a note-type personal computer that uses a decorative component for mobile terminal of the present embodiment.

A note-type personal computer 80 as shown in Fig. 6 consists of a body side casing 84 equipped with a keyboard 81, a track pad 82 and button switches 83L, 83R; and a display 86 fixed to the body side casing 84 through hinges 85L, 85R so as to be capable of freely opened and closed.

The track pad 82 consists of a pressure-sensitive or electrostatic pointing device and is used for move of a pointer and command input on a screen of the display 86. For example, it is used for specification of the file icon-displayed on the display 86 and selection of application programs, and is also used for drag of the icon on the display 86 and plural selections of character string on a text file by a combination operation of button switches 83L, 83R.

The button switch 83L is used for command such as opening and closing of a file specified or selected by a pointing function of the track pad 82, or execution of processing, in addition to the above combination operation.

The button switch 83R has a function to display a context menu on a screen of a display 86, and to display attribute information of the file specified or selected by a pointing function of the track pad 82. The context menu as used herein means a function to pop up display a selectable processing on the screen of the display 86.

By forming at least one of the above track pad 82 and button switches 83a, 83b from the ceramics for decorative component of the present embodiment, it is made possible to provide the user with high-grade impression, aesthetic satisfaction and mind soothing effect over a long period, and to make the user to feel satisfaction through procession of the mobile phone that develops such color tone.

Meanwhile a description was made using the mobile phone and the note-type personal computer as an example of mobile terminals. However, the mobile terminal using the mobile terminal of the present embodiment is not limited to the mobile phone and the note-type personal computer. The present invention can be applied to various portable terminals, the components of which are required to have decorative value, such as portable information terminal (portable digital assistant (PDA)), portable car navigation and portable audio player.

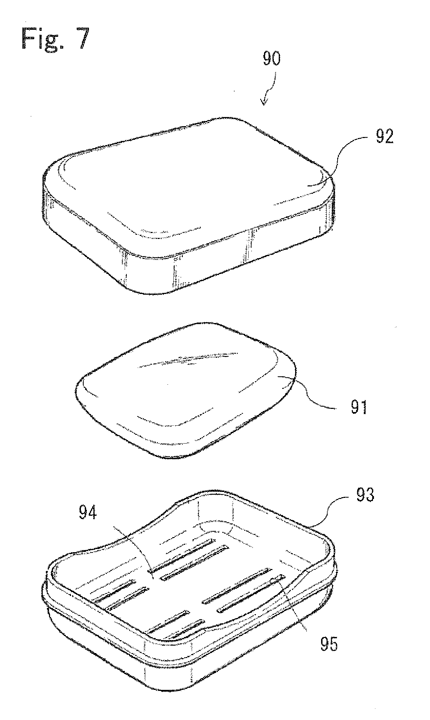

Fig. 7 is a schematic diagram showing an example of constitution of a soap case that is a decorative component for daily life articles of the present embodiment.

The soap case 90 consists of a case body 93 and a cap 92, wherein a soap placing surface 94 of the case body 93 whereon a soap 91 is to be placed includes draining slits 95 for draining water carried by the soap 91 formed therein. When the soap 91 is not used, the soap 91 is placed on the soap placing surface 94, and is accommodated by putting the cap 92 onto the case body 93. When the soap 91 is used, the cap 92 is removed from the case body 93 and the soap 91 is taken out. By placing the soap 91 on the soap placing surface 94 of the case body 93 after use, water adhered on the soap 91 can be drained through the drain slits 95, so as to prevent the soap 91 from being soaked with water.

By forming the cap 92 or the case body 93 of the soap case 90 from the ceramics for decorative component of the present embodiment, it is made possible to provide many users with the joy of possessing it and gives high-grade impression, aesthetic satisfaction and mind soothing effect through visual sense during use.

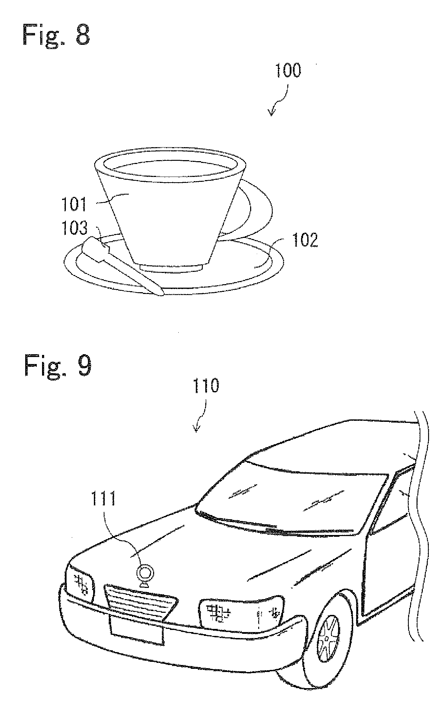

Fig. 8 is a perspective view showing an example of a coffee cup set that is another example of a decorative component for daily life articles of the present embodiment.

The coffee cup set 100 as shown in Fig. 8 consists of a coffee cup 101, a saucer 102 and a spoon 103. By forming the coffee cup 101, the saucer 102 and the spoon 103 from the ceramics for decorative component of the present embodiment, it is made possible to provide many users with the joy of possessing it, and to give high-grade impression, aesthetic satisfaction and mind soothing effect through visual sense during use.

Since the ceramics for decorative component of the present embodiment have favorable property for color coordination, at least one of the coffee cup 101, the saucer 102 and the spoon 103 may be formed from the ceramics for decorative component of the present embodiment, and can also be used in combination with other members having different color tones.

The decorative component for daily life articles of the present embodiment can be preferably applied to, in addition to the soap case 90 and the coffee cup set 100, the handle of tooth brush or shaver, earpick, scissors and other decorative component for daily life articles. By using the ceramics for decorative component of the present embodiment for toiletry goods marked with various logos in the bath rooms and toilet rooms of a luxury hotel, it is made possible to provide high-grade impression, aesthetic satisfaction and mind soothing effect, spiced with excitement of being cut off from the everyday lives.

Fig. 9 is a perspective view showing an example of a vehicle body having a decorative component for vehicle parts of the present embodiment mounted thereon.

The vehicle body 110 shown in Fig. 9 has an emblem 111 which is decorative component for vehicle parts. By forming the emblem 111 from the ceramics for decorative component of the present embodiment, it is made possible to provide the user with high-grade impression, aesthetic satisfaction and mind soothing effect through visual sense, and thus improve the decorative value of the vehicle body 110. While Fig. 9 shows the emblem 111 that is mounted on the front of the vehicle body 110, decorative value of the vehicle body 110 can be improved also by attaching the emblem 111 formed from the ceramics for decorative component of the present embodiment that show the manufacturer's name or the model name, on the rear of the vehicle body 110.

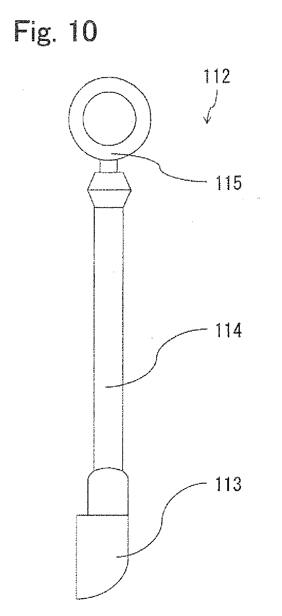

Fig. 10 is a front view showing an example of corner pole that uses the decorative component for vehicle parts of the present embodiment.

The corner pole 112 as shown in Fig. 10 is installed so as to mark the left front corner of the vehicle (in the case of a right-hand drive vehicle) which is difficult to see from the driver seat when moving in or out of a parking lot, and comprises a mount 113 to be fastened onto the vehicle body, a pole unit 114 and a lighting unit 115 consisting of LED or the like. It is preferred to form the pole unit 114 of the corner pole 112 from the ceramics for decorative component of the present embodiment, or mounting the emblem formed from the ceramics for decorative component of the present embodiment instead of the lighting unit 115, so as to improve decorative value of the vehicle body as well as of the corner pole 112.

The decorative component for vehicle of the present embodiment is preferred since the decorative value is improved even if it may be used not only to the emblem 111 and the corner pole 112, but also to a part of wheel cap, a part of hood ornament mounted on the bonnet of the vehicle body, small articles and accessories installed within the vehicle or a part thereof.

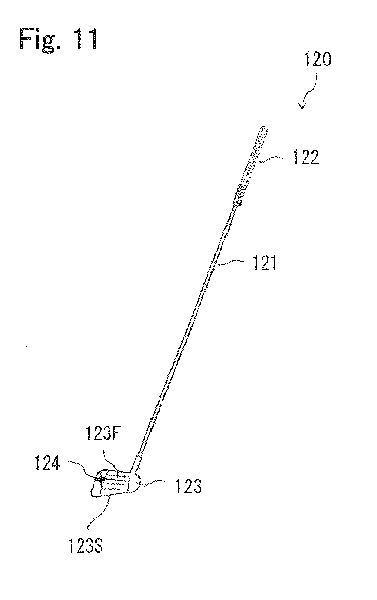

Fig. 11 is a front view showing an example of golf club that uses the decorative component for sports goods of the present embodiment.

The golf club 120 as shown in Fig. 11 includes a shaft 121, a grip 122 attached to one end of the shaft 121 and a head 123 attached to the other end of the shaft 121. The head 123 includes an impact face 123F that hits a golf ball, and a sole surface 123S that touches the ground. It is preferred to embed an accessory 124 formed from the ceramics for decorative component of the present embodiment in the impact face 123F, as shown in Fig. 11, since the decorative value is improved.

In the decorative component for sports goods of the present embodiment, it is preferred that, in addition to the impact face 123F, the accessory 124 formed from the ceramics for decorative component of the present embodiment is embedded in the sole surface 123S or the grip 122, and the grip 122 itself is formed from the ceramics for decorative component of the present embodiment.

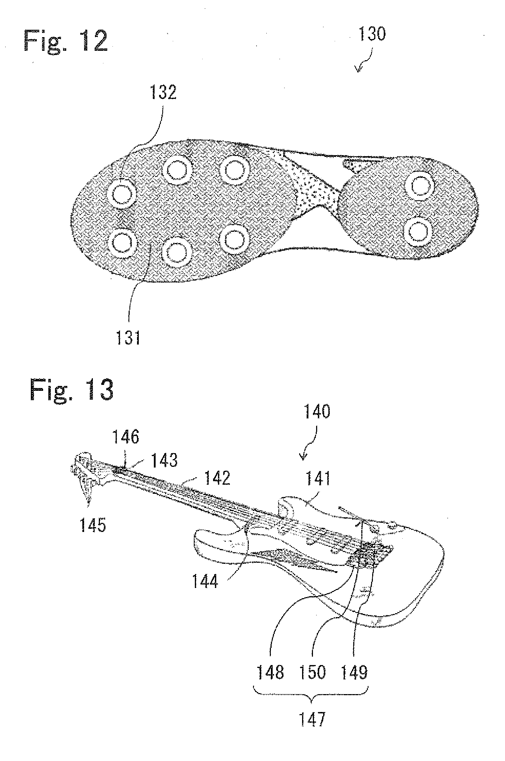

Fig. 12 is a bottom view showing an example of spike shoes that uses the decorative component for sports goods of the present embodiment.

The spike shoes 130 as shown in Fig. 12 are worn by, for example, soccer or rugby players, and has a plurality of studs 132 planted in sole 131 to protrude therefrom so as to stabilize a pivot foot when kicking a ball. The studs 132 formed from the ceramics for decorative component of the present embodiment have the effects of, besides the improvement in decorative value, higher wear resistance than that of studs made of aluminum alloy that have hitherto been used, so as to decrease the frequency of replacement of the studs 132 and thereby reducing the cost incurred from the replacement. The studs 132 may be covered by a transparent resin to prevent the studs 132 from being chipped during a game.

Fig. 13 is a perspective view showing an example of guitar that uses the decorative component for musical instrument of the present embodiment.

The guitar 140 as shown in Fig. 13 consists mainly of a body 141 and a neck 142 that extends forward from the body 141. Disposed near the distal end of the neck 142 is a nut 143, and a tuning peg 145 capable of adjusting the tension of the string 144 is provided beyond the nut 143 for each of strings 144. A clamp mechanism 146 is provided near the nut 143 so as to hold the strings 144 and to prevent from moving with respect to the nut 143.

The body 141 has a tremolo arm 147 for producing impressive sound effect by increasing or decreasing the tensions of the strings 144 at the same time. The tremolo arm 147 includes a base plate 148 that is attached to the body 141, a bridge saddle 149 that is held on the base plate 148 and holds the strings 144 in tunable state, and a tremolo bar 150 that actuates the tremolo arm. By forming the base plate 148 of this guitar 140, the bridge saddle 149, the tremolo bar 150 or the like from the ceramics for decorative component of the present embodiment, it is made possible to improve the decorative value of the guitar 140. This provides the joy of possessing the guitar 140 and helps captivate a large audience.

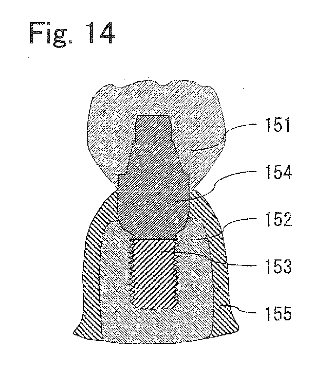

Fig. 14 is a schematic diagram showing an example of artificial dental crown that uses the decorative component for accessory of the present embodiment.

The schematic diagram of Fig. 14 shows an artificial dental crown 151 attached onto an abutment 154 that is fastened onto an artificial dental root (implant) 153 which is embedded in a jaw bone 152 within a gingival 155. When the artificial dental crown 151 is formed from the ceramics for decorative component of the present embodiment, the tooth shines in golden color, and thus it is possible to give enthusiastic feeling to users who like decorating their teeth.

The artificial dental root 153 embedded in the jaw bone 152 is formed in the shape of screw. A hard bond layer may be formed, on the portion that is formed in the shape of screw, from a biodegradable material that contains at least one kind selected from among chitin, collagen and derivatives thereof that have capability to induce the generation of new bone. A base of the abutment 154 may be provided with a soft bond layer formed from the crosslinked biodegradable material, so as to make contact with the gingival 155 located over the jaw bone 152.

The ceramics for decorative component of the present embodiment are formed from titanium nitride-based sintered body, and are therefore biocompatible. It is preferable to make use of this advantage through application to the artificial dental root 153 and the abutment 154, as well as the artificial dental crown 151.

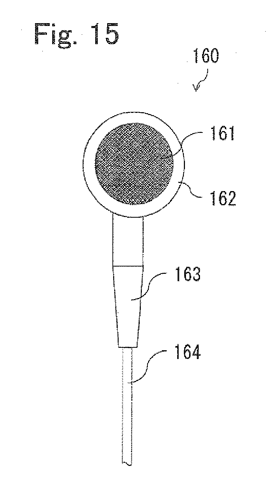

Fig. 15 is a front view showing an example of earphone unit that uses the decorative component for accessory of the present embodiment.

The earphone unit 160 as shown in Fig. 15 includes a speaker 161 that is inserted into the ear of the listener to produce sound waves, a case 162 that houses the speaker 161 and a cord 164 that feeds electric signals to the speaker 161 via a lead 163 that is in contact with the case 162.

By forming the case 162 of the earphone unit 160 from the ceramics for decorative component of the present embodiment, it is made possible to provide the decorative component for accessory that improves the decorative value, and provides many users with high-grade impression, aesthetic satisfaction and mind soothing effect through visual sense.

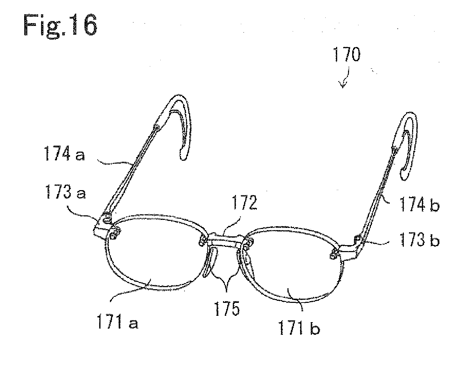

Fig. 16 is a perspective view showing an example of eyeglass frame that uses the decorative component for accessory of the present embodiment.

The eyeglasses 170 as shown in Fig. 16 includes a pair of lenses 171a, 171b that provide vision correction or protection of eyes against ultraviolet rays, a bridge 172 that links the pair of lenses 171a, 171b together, hinges 173a, 173b that connect to the respective lenses 171a, 171b, temples 174a, 174b that connect to the armors 173a, 173b so as to be capable of swiveling through the hinge, and a nose pad 175 attached via nose pad link members to the lenses 171a, 171b, respectively.

By forming at least one of the bridge 172, the temples 174a, 174b and the nose pad 175 of this eyeglasses 170 from the ceramics for decorative component of the present embodiment, it is made possible to provide the decorative component for accessory that improves the decorative value, and provides many users with high-grade impression, aesthetic satisfaction and mind soothing effect through visual sense.

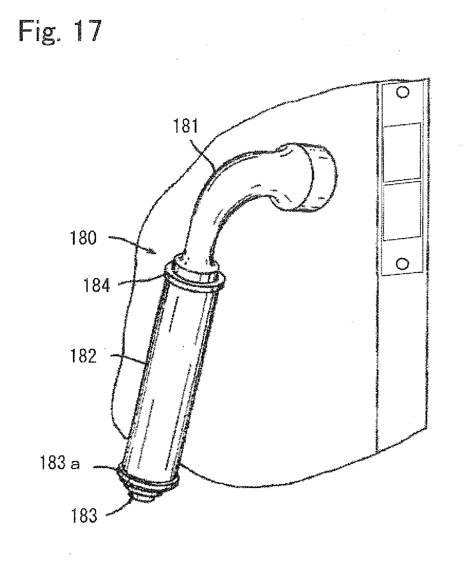

Fig. 17 is a perspective view showing an example of a grip for a door handle that uses a decorative component for architectural members of the present embodiment.

A door handle 180 as shown in Fig. 17 includes a body 181 extending in an L-shape and a cylindrical grip 182 fitted to the end of the body 181, and the grip 182 is fixed to the body 181 by interposing between a nut 183 with a flange 183a formed thereon from the tip side and a flange 184 from the rear end side.

By forming the grip 182 for the door handle from the ceramics for decorative component of the present embodiment, it is made possible to provide the decorative component for architectural members that improves the decorative value, and provides many users with high-grade impression, aesthetic satisfaction and mind soothing effect through visual sense.

The method of manufacturing ceramics for decorative component of the present embodiment will be described below.

In order to obtain ceramics for decorative component of the present embodiment, first, specified amounts of powders of titanium nitride that becomes the main component of the sintered body, nickel, niobium, chromium and carbon are weighed, ground and mixed together with water, 2-propanol, methanol or ethanol to prepare the raw material. More specifically, a powder of titanium nitride having a mean particle size of 10 to 30 $\mu$m, a powder of nickel having a mean particle size of 10 to 20 $\mu$m, a powder of niobium having a mean particle size of 20 to 50 $\mu$m and a powder of carbon having a mean particle size of 0.1 to 10 $\mu$m are prepared. 7 to 14.5% by mass of a nickel powder, 2.5 to 10% by mass of a niobium powder, 1.5 to 6.5% by mass of a chromium powder and 1 to 2% by mass of a carbon powder, with the remainder being a titanium nitride powder, may be weighed, ground and mixed.

To produce the titanium nitride-based sintered body in which an intermetallic compound composed of nickel and either one of niobium and titanium is contained in the decorative surface, specified amounts of the respective powders may be weighed, ground and mixed together with water, and the grinding and mixing time may be set to not less than 40 hours and not more than 70 hours.

To form the crystal grain boundary phase that bonds titanium nitride in the state of nickel atoms surrounding chromium atoms, it is necessary to increase the probability of a nickel powder and a chromium powder making contact with each other. The probability can be increased by increasing the grinding and mixing time so as to increase the probability, for example, the grinding and mixing time may be set to not less than 150 hours. The raw material to be prepared may contain silicon, phosphorus, sulfur, manganese, iron, etc. as inevitable impurities, although these elements can have adverse effect on the color tone of the decorative surface and therefore it is preferable that concentration of each of these elements is less than 0.5% by mass.

The titanium nitride powder may be either TiN of stoichiometrical composition, or TiN$_{1-x}$ (0 < x < 1) of non-stoichiometrical composition. In view of high wear resistance and color tone which has high decorative value, purity of each of the powders is preferably not less than 99%. There arises no problem if a part of the titanium nitride powder reacts with the nickel powder thereby forming a small amount of TiNi. To form the titanium nitride-based sintered body that forms the ceramics for decorative component and has the composition of $TiN_x$ with x satisfying $0.8 \leq x \leq 0.96$, titanium nitride having the composition of $TiN_x$ with x satisfying $0.7 \leq x \leq 0.9$ may be used.

The prepared raw material is mixed, for example, with water, and ground and mixed using a mill. With a predetermined quantity of paraffin wax added as a binder, the mixture is formed into a desired shape such as disk, plate and ring by a desired molding process, for example, dry pressure molding process, cold hydrostatic pressure molding process, extrusion molding process or the like.

In case that the dry pressure molding process is employed as the molding process, it is preferable to set the molding pressure in a range from 49 to 196 MPa, since the molding pressure has an influence on the open void ratio and the Vickers hardness (Hv) of the decorative surface. Setting the molding pressure in a range from 49 to 196 MPa makes it possible to make a sintered body having a relative density of not less than 95%, an open void ratio of not more than 2.5% and Vickers hardness (Hv) of not less than 8 GPa. It is also possible to elongate the service life of a die since a force received from a green compact as a counteraction is suppressed.

The green compact thus obtained is optionally degreased in a non-oxidizing atmosphere such as nitrogen atmosphere or inert gas atmosphere to form the degreased green compact, and then the degreased green compact is accommodated in a container made of ceramics and fired in a gas atmosphere of at least one selected from nitrogen and inert gas, or in vacuum to obtain a sintered body having a relative density which is not less than 95% of a theoretical density. In the container made of ceramics, a powder having comparatively high melting point, for example, a powder containing, as a main component, at least one kind of aluminum nitride, yttrium oxide, calcium oxide, boron, zirconium oxide and magnesium oxide is spread in advance as a spreading powder for firing, and the degreased green compact is placed on this spreading powder for firing. As used herein, the main component is a component which accounts for not less than 90% by mass of 100% by mass of all components that constitute the spreading powder for firing. To obtain the ceramics for decorative component in which the lattice constant of crystal grains of titanium nitride of the decorative surface is not less than 0.4242 nm and not more than 0.4252 nm, a spreading powder for firing, which contains nitride as the main component and the content of nitride is not less than 93% by mass, may be used.

When a powder of an oxide is selected as the spreading powder for firing, a surface of this powder is preferably modified by nitrization for the following reason. That is, even if the spreading powder for firing is contacted with the degreased green compact, the contact portion of the degreased green compact is less likely to be influenced by pollution due to oxygen. The green compact is fired in a gas atmosphere of at least one selected from nitrogen and inert gas, or in vacuum because, when fired in an oxidizing atmosphere, most of titanium is oxidized thereby converting into titanium oxide represented by the composition formula $TiO_2$, and titanium oxide is influenced by original white color tone of titanium oxide, and thus the color of the entire ceramics for decorative becomes dull whitish color.

In case that the ceramics for decorative component are obtained by firing in vacuum, the vacuum degree is preferably not more than 1.33 Pa. The reason why the vacuum degree is set to not more than 1.33 Pa is as follows. That is, the color of the ceramics for decorative component does not become whitish color as a result of oxidization of titanium during firing, and therefore the ceramics for decorative component having golden color tone are obtained. Furthermore, the firing temperature is preferably adjusted within a range from 1,200°C to 1,800°C, thus making it possible to make a sintered body having a relative density of not less than 95% and an open void ratio of not more than 2.5% with lower cost of firing.

The surface of the thus obtained sintered body which is required to have decorative value is lapped on a lapping machine, followed by barrel polishing process. As a result, the surface of the sintered body has golden color tone, thereby providing the ceramics for decorative component of the present embodiment. It is preferable that voids that open on the decorative surface are controlled so that the maximum width of the opening is not more than 30 $\mu$m. By controlling the size of opening within this range, entry of bacteria, polluting material and other foreign matter into the voids can be suppressed.

In case that the product made from the ceramics for decorative component has a complicated shape, the material may be first formed in a block or other convenient shape which resembles the product shape by dry pressure molding process, cold hydrostatic pressure molding process, extrusion molding process, injection molding process or the like, with the resultant green compact being sintered, ground into the product shape and finished by lapping and barrel polishing. Alternatively, the material may be formed directly into the product shape by injection molding process, with the resultant green compact being sintered and subjected to lapping and barrel polishing.

The arithmetic mean height Ra of the decorative surface can be controlled to not more than 0.03 $\mu$m, through lapping process by supplying a diamond abrasives having small mean particle size onto a lapping stage made of tin. For example, diamond abrasive having a mean particle size of not more than 1 $\mu$m may be used. In the barrel polishing process, a rotary barrel polishing machine may be used with a polishing medium made of green carborundum (GC) charged into the rotary barrel polishing machine so as to carry out wet polishing operation for 24 hours.

The ceramics for decorative component of the present embodiment obtained as described above have such a type of golden color that is highly evaluated as especially beautiful color tone, which produces high-grade impression and aesthetic satisfaction, and therefore provides mind soothing effect through visual sense. As described above, the ceramics for decorative component can be preferably used as decorative component for watch such as watch case and links of watchband, decorative component for mobile terminal such as mobile phone and note-type personal computer, decorative component for daily life articles such as soap case, coffee cup set, knife, fork, handles of tooth brush and shaver, earpick, scissors, seal or name card, decorative component for vehicle parts such as emblem representing manufacturer's name or model name, corner pole, etc., decorative component for sports goods for decorating golf club or spike shoes, decorative component for musical instrument for decorating guitar or the like, decorative component for accessory such as decoration of earphone, artificial dental crown, eyeglasses, brooch, necklace, earring, ring, bracelet, anklet, necktie pin, tie tack, medal, button, etc., decorative component for architectural members such as tiles for decorating floor, wall or ceiling, grip for door handle, etc. The ceramics for decorative component can also be preferably used as decorative component for wrist watch type mobile phone that combines the functions of a watch and a mobile phone.

The present invention will be described in detail below by way of Examples, but the present invention is not limited to these Examples.

Example 1

First, a titanium nitride powder (purity 99%, mean particle size 22.3 $\mu$m), a nickel powder (purity 99.5%, mean particle size 12.8 $\mu$m), a niobium powder (purity 99.5%, mean particle size 33 $\mu$m), a chromium powder (purity 99%, mean particle size 55 $\mu$m) and a carbon powder (purity not less than 99%, mean particle size 55 $\mu$m) were weighed so as to set a ratio (content) in the sintered body to that shown in Table 1, ground and then mixed to obtain a prepared raw material.

Then, water was added to each of the obtained prepared raw materials, followed by grinding and mixing for 72 hours using a vibration mill. Paraffin wax (3 parts by mass) as a binder was added to the prepared raw materials and the mixture was dried and turned into granules by a spray drying method. The granules thus obtained were subjected to pressure molding under a pressure of 98 MPa to make a green compact. The green compact was degreased at 600°C in a nitrogen atmosphere to form a degreased green compact. The degreased green compact was placed in a container made of ceramics in which a spreading powder for firing, whose component and content thereof are shown in Table 1, is spread, and then fired by maintaining in a nitrogen atmosphere at 1,530°C for 2 hours to obtain a disk-shaped sintered body measuring 16 mm in diameter.

The sintered body was lapped on the surface thereof for one hour by supplying diamond abrasive having a mean particle size of 1 $\mu$m onto a lapping stage made of tin. Subsequently, the sintered body was put into a rotary barrel polishing machine together with water and media made of green carborundum (GC) so as to carry out barrel polishing operation for 24 hours. Thus, samples Nos. 1 to 28 of the ceramics for decorative component formed from titanium nitride-based sintered body were obtained.

Thereafter, the content of aluminum of the decorative surface of each sample was measured by ICP emission spectrometry. The decorative surface of the sample in the present Example refers to only a lapped surface.

Then, contents of nickel, niobium and chromium that constitute each sample were measured by using a fluorescent X-ray analysis (XRF) instrument, while the carbon content was measured by using a carbon analyzer. The arithmetic mean height Ra of the decorative surface was measured at five points in accordance with JIS B 0601-2001 using a touch probe type surface roughness meter with the measurement length being set to 5 mm, the cut-off point set to 0.8 mm, the probe tip radius set to 2 $\mu$m and scanning speed of the probe being set to 0.5 mm/sec, and the mean value was calculated. Furthermore, fracture toughness $K_{1c}$ was measured in accordance with indentation-fracture method (IF method) specified in JIS R 1607-1995 and the hardness was measured in accordance with JIS R 1610-2003. Specifically, Vickers hardness Hv (hereinafter referred to as hardness) was measured at five points of the decorative surface, and the measurements were averaged.

Silver-white spot-like foreign matters on the decorative surface and the back surface of each sample were visually observed.

Regarding lightness index and chromaticness indices of each sample, color tone of the decorative surface was measured in accordance with JIS Z 8722-2000, using a spectrocolorimeter (CM-3700d manufactured by Konica Minolta Holdings Inc., etc.) in combination with CIE standard light source of D65 with view angle being set to 10° and the measurement area being set to 3 mm by 5 mm.

The color tone was evaluated by 40 monitors consisting of 5 male and 5 female monitors in each age brackets from 20s to 50s by responding to questionnaire asking how they felt about three aspects of quality; high-grade impression, aesthetic satisfaction and mind soothing effect. It was decided that the sample was "Excellent" when not less than 90% of the monitors responded positively for any of three aspects of quality; high-grade impression, aesthetic satisfaction and mind soothing effect, "Good" when the proportion was not less than 70% and less than 90% for at least one of the three aspects of quality, and "Poor" when the proportion was less than 70% for at least one of the three aspects of quality. Using, as a standard sample, sample No. 9 in which not less than 100% of the monitors responded positively for any of three aspects of quality; high-grade impression, aesthetic satisfaction and mind soothing effect, color difference of each sample to sample No. 9 was calculated using the above formula (A).

The lattice constant of crystal grains of titanium nitride of the decorative surface was determined using a high-resolution x-ray diffraction method.

Specifically, the lattice constant was determined by the following procedure: each sample is irradiated with $CuK_{\alpha 1}$ characteristic X-ray and scanning is performed at a step of 0.008° in a range where a diffraction angle (2θ) satisfies a relation: 20° ≤ 2θ ≤ 110° to obtain an X-ray diffraction pattern, and then the pattern is analyzed by a Rietveld method using RIETAN-2000 program (produced by Mr. Fujio Izumi: F. Izumi and T. Ikeda, Mater. Sci. Forum, 321-324 (2000) 198). Since the lattice constant varies depending on a peak shape of an X-ray diffraction pattern from each crystal plane of crystal grains of titanium nitride, the peak shape was limited using Toratani's division pseudo-voigt function. Regarding silver-white spot-like foreign matters on the decorative surface of each sample, sample where white spot-like foreign matters were visually observed as rated "C", and sample where white spot-like foreign matters were not visually observed as rated "B". Regarding silver-white spot-like foreign matters on the back surface of each sample, sample where white spot-like foreign matters were visually observed as rated "C", sample where white spot-like foreign matters were not visually observed but observed using an optical microscope at a magnification of 100 times was as rated "B", and sample where white spot-like foreign matters were not visually observed, and also sample where white spot-like foreign matters were not observed even using an optical microscope at a magnification of 100 times was as rated "A",

Regarding the respective results, each composition, the content of aluminum and the spreading powder for firing are shown in Table 1. The respective evaluation results of fracture toughness, hardness, foreign matters on the decorative surface and back surface, lightness index L*, chromaticness indices a* and b*, color difference, high-grade impression, aesthetic satisfaction, mind soothing effect, evaluation and lattice constant are shown in Table 2.

[Table 1]

| Sample No. | Ni (% by mass) | Nb (% by mass) | Cr (% by mass) | C (% by mass) | Al (% by mass) | Spreading powder for firing | | Mean value of arithmetic mean height Ra (μm) |
|---|---|---|---|---|---|---|---|---|
| | | | | | | (Main component) | (% by mass) | |
| *1 | 9 | 8 | 2 | 0.1 | 0.1 | Aluminum nitride | 90 | 0.021 |
| *2 | 9 | 8 | 2 | 0.3 | 0.1 | Aluminum nitride | 90 | 0.028 |
| 3 | 9 | 8 | 2 | 0.4 | 0 | Aluminum nitride | 98 | 0.028 |
| 4 | 9 | 8 | 2 | 0.4 | 0.04 | Aluminum nitride | 95 | 0.028 |
| 5 | 9 | 8 | 2 | 0.4 | 0.07 | Aluminum nitride | 93 | 0.027 |
| 6 | 9 | 8 | 2 | 0.4 | 0.1 | Aluminum nitride | 90 | 0.027 |
| *7 | 9 | 8 | 2 | 0.4 | 0.2 | Aluminum nitride | 90 | 0.028 |
| 8 | 9 | 8 | 2 | 0.5 | 0.1 | Aluminum nitride | 90 | 0.027 |
| 9 | 9 | 8 | 2 | 0.7 | 0.1 | Aluminum nitride | 90 | 0.028 |
| 10 | 9 | 8 | 2 | 0.9 | 0.1 | Aluminum nitride | 90 | 0.024 |

(continued)

| Sample No. | Ni (% by mass) | Nb (% by mass) | Cr (% by mass) | C (% by mass) | Al (% by mass) | Spreading powder for firing (Main component) | (% by mass) | Mean value of arithmetic mean height Ra ($\mu$m) |
|---|---|---|---|---|---|---|---|---|
| *11 | 9 | 8 | 2 | 1.2 | 0.1 | Aluminum nitride | 90 | 0.025 |
| 12 | 19.5 | 10 | 2 | 0.5 | 0.1 | Aluminum nitride | 90 | 0.025 |
| 13 | 17.5 | 10 | 2 | 0.5 | 0.1 | Aluminum nitride | 90 | 0.026 |
| 14 | 8 | 5 | 2 | 0.5 | 0.1 | Aluminum nitride | 90 | 0.025 |
| 15 | 6 | 2.5 | 2 | 0.5 | 0.1 | Aluminum nitride | 90 | 0.029 |
| *16 | 0 | 8 | 2 | 0.5 | 0.1 | Aluminum nitride | 90 | 0.027 |
| 17 | 5 | 8 | 2 | 0.5 | 0.1 | Aluminum nitride | 90 | 0.028 |
| 18 | 7 | 8 | 2 | 0.5 | 0.1 | Aluminum nitride | 90 | 0.024 |
| 19 | 10 | 8 | 2 | 0.5 | 0.1 | Aluminum nitride | 90 | 0.025 |
| 20 | 14.5 | 8 | 2 | 0.5 | 0.1 | Aluminum nitride | 90 | 0.030 |
| 21 | 17 | 8 | 2 | 0.5 | 0.1 | Aluminum nitride | 90 | 0.028 |
| *22 | 10 | 0 | 2 | 0.5 | 0.1 | Aluminum nitride | 90 | 0.029 |
| 23 | 10 | 1 | 2 | 0.5 | 0.1 | Aluminum nitride | 90 | 0.028 |
| 24 | 10 | 3 | 2 | 0.5 | 0.1 | Aluminum nitride | 90 | 0.026 |
| 25 | 10 | 8 | 2 | 0.5 | 0.1 | Aluminum nitride | 90 | 0.024 |
| 26 | 10 | 10 | 2 | 0.5 | 0.1 | Aluminum nitride | 90 | 0.026 |
| 27 | 9 | 8 | 2 | 0.7 | 0.1 | Aluminum nitride | 90 | 0.064 |
| 28 | 8 | 5 | 2 | 0.5 | 0.1 | Aluminum nitride | 90 | 0.043 |

*Sample marked with * is out of the scope of the present invention.

[Table 2]

| Sample No. | fracture toughness (MPa·√m) | Hardness (GPa) | Foreign matters on decorative surface | Foreign matters on back surface | Lightness index L* | Chromaticness index a* | Chromaticness index b* | Color difference (ΔE*ab) | High-grade feeling (%) | Aesthetic satisfaction (%) | Mind soothing effect (%) | Evaluation | Lattice constant (nm) |
|---|---|---|---|---|---|---|---|---|---|---|---|---|---|
| *1 | 3.1 | 9.2 | B | B | 65 | 2 | 38 | 14.8 | 70 | 70 | 70 | Poor | 0.4254 |
| *2 | 4.4 | 9.4 | B | B | 67 | 2 | 37 | 12.7 | 80 | 80 | 70 | Poor | 0.4254 |
| 3 | 4.7 | 9.9 | B | A | 72 | 3 | 30 | 7 | 90 | 90 | 90 | Excellent | 0.4242 |
| 4 | 4.7 | 9.9 | B | A | 72 | 3 | 30 | 7 | 90 | 90 | 90 | Excellent | 0.4247 |
| 5 | 4.7 | 9.9 | B | A | 72 | 3 | 30 | 7 | 90 | 90 | 90 | Excellent | 0.4252 |
| 6 | 4.7 | 9.9 | B | B | 72 | 3 | 30 | 7 | 90 | 90 | 90 | Excellent | 0.4253 |
| *7 | 4.7 | 9.9 | C | C | 72 | 3 | 30 | 7 | 0 | 0 | 0 | Poor | 0.4256 |
| 8 | 5 | 10.3 | B | B | 75 | 4 | 30 | 4.1 | 90 | 90 | 90 | Excellent | 0.4253 |
| 9 | 5.7 | 10.3 | B | B | 78 | 6 | 32 | - | 100 | 100 | 100 | Excellent | 0.4253 |
| 10 | 6 | 10.6 | B | B | 75 | 9 | 31 | 4.4 | 90 | 90 | 90 | Excellent | 0.4253 |
| *11 | 6.5 | 11 | B | B | 71 | 12 | 29 | 9.6 | 70 | 80 | 70 | Poor | 0.4253 |
| 12 | 6.8 | 10 | B | B | 77 | 3 | 24 | 8.6 | 90 | 90 | 80 | Good | 0.4254 |
| 13 | 6 | 10.5 | B | B | 82 | 9 | 26 | 7.8 | 80 | 80 | 80 | Good | 0.4253 |
| 14 | 5.3 | 10 | B | B | 77 | 5 | 31 | 1.7 | 90 | 90 | 90 | Excellent | 0.4253 |
| 15 | 5.4 | 10 | B | B | 72 | 7 | 33 | 6.2 | 100 | 90 | 90 | Excellent | 0.4253 |
| *16 | 5.1 | 9.5 | B | B | 61 | 10 | 26 | 18.5 | 50 | 50 | 50 | Poor | 0.4253 |
| 17 | 6 | 9.9 | B | B | 75 | 4 | 38 | 7 | 90 | 90 | 80 | Good | 0.4253 |
| 18 | 5.7 | 10 | B | B | 75 | 6 | 36 | 5 | 100 | 100 | 100 | Excellent | 0.4253 |
| 19 | 5.8 | 10.6 | B | B | 74 | 8 | 33 | 4.6 | 90 | 100 | 100 | Excellent | 0.4253 |
| 20 | 6 | 10.9 | B | B | 73 | 9 | 30 | 6.2 | 90 | 100 | 100 | Excellent | 0.4253 |
| 21 | 6.5 | 11.1 | B | B | 82 | 10 | 27 | 7.5 | 90 | 80 | 80 | Good | 0.4253 |
| *22 | 6.2 | 10.5 | B | B | 69 | 9 | 27 | 10.7 | 70 | 70 | 70 | Poor | 0.4254 |

(continued)

| Sample No. | fracture toughness (MPa·√m) | Hardness (GPa) | Foreign matters on decorative surface | Foreign matters on back surface | Lightness index L* | Chromaticness index a* | Chromaticness index b* | Color difference (ΔE*ab) | High-grade feeling (%) | Aesthetic satisfaction (%) | Mind soothing effect (%) | Evaluation | Lattice constant (nm) |
|---|---|---|---|---|---|---|---|---|---|---|---|---|---|
| 23 | 5.7 | 10.5 | B | B | 70 | 7 | 28 | 9 | 80 | 90 | 90 | Good | 0.4253 |
| 24 | 5.6 | 10.3 | B | B | 73 | 7 | 32 | 5 | 90 | 100 | 90 | Excellent | 0.4253 |
| 25 | 5 | 10.3 | B | B | 76 | 5 | 30 | 3 | 90 | 90 | 90 | Excellent | 0.4253 |
| 26 | 5.1 | 10.4 | B | B | 79 | 4 | 28 | 4.6 | 90 | 90 | 90 | Excellent | 0.4253 |
| 27 | 5.6 | 10.3 | B | B | 71 | 4 | 26 | 9.4 | 80 | 80 | 90 | Good | 0.4253 |
| 28 | 5.5 | 10.3 | B | B | 71 | 5 | 27 | 8.7 | 80 | 90 | 90 | Good | 0.4253 |

*Sample marked with * is out of the scope of the present invention.

As is apparent from Table 2, when color difference is more than 9.5, it is impossible to produce the decorative value required by monitors in at least one of the three aspects of quality; high-grade impression, aesthetic satisfaction and mind soothing effect. Sample Nos. 1 and 2 that were out of the scope of the present invention had carbon concentration of less than 0.4% by mass that resulted in low fracture toughness and low hardness, and showed large color difference (ΔE*ab) from sample No. 9 used as the standard sample. Sample No. 11 that had carbon concentration of more than 0.9% by mass and therefore showed high fracture toughness and high hardness, but had high chromaticness index a* and therefore did not produce the required decorative value and failed to satisfy the monitors.

Sample No. 16, in which nickel content serving as a binder that bonds the crystal grains of titanium nitride was 0% by mass, had portion that remained without being sintered, and could not be used for decorative component. Sample No. 22, in which niobium content was 0% by mass, did not produce the decorative value required by monitors and failed to satisfy the monitors.

Since samples Nos. 3 to 6, 8 to 10, 12 to 15, 17 to 21 and 23 to 28 of the present invention included the carbon content of not less than 0.4% by mass and not more than 0.9% by mass, the decorative value required by monitors is obtained, and thus making it possible to satisfy the monitors. Also, in samples Nos. 3 to 6, 8 to 10, 12 to 15, 17 to 21 and 23 to 28 of the present invention, black color developed by carbon causes realization of slight achromatic color thereby making it possible to suppress color unevenness and to decrease color difference (ΔE*ab) to sample No. 7. Therefore, the user scarcely felt a difference generated between decorative components.

In particular, samples Nos. 3 to 6, 8 to 10, 14, 15, 18 to 20 and 24 to 26 of the present invention, that showed the arithmetic mean height Ra of the decorative surface of not more than 0.03 Δm, the lightness index L* of not less than 72 and not more than 84, chromaticness indices a* and b* of not less than 3 and not more than 9 and not less than 27 and not more than 36, respectively, in the L*a*b* color space of CIE1976 of the decorative surface, and therefore had high reflectivity of the decorative surface to light. This resulted in enhanced luster, and not less than 90% of the monitors responded positively evaluated high-grade impression, aesthetic satisfaction and mind soothing effect, showing that most of the monitors were satisfied.

When a comparison is made between samples Nos. 3 to 6 in which a ratio (content) of a titanium nitride powder, a nickel powder, a niobium powder, a chromium powder and a carbon powder in the sintered body are the same, since the lattice constant of crystal grains of titanium nitride of the decorative surface is not less than 0.4242 nm and not more than 0.4252 nm in samples Nos. 3 to 5, impurities are scarcely solid-soluted in titanium nitride. Therefore, even in case of observing using an optical microscope at a magnification of 100 times, foreign matters are not observed on back surface and thus it is apparent that it is also suitable even in case where the back surface is the decorative surface.

[Example 2]

First, a titanium nitride powder (purity 99%, mean particle size 22.3 μm), a nickel powder (purity 99.5%, mean particle size 12.8 μm), a niobium powder (purity 99. 5°, mean particle size 33 μm), a chromium powder (purity 99%, mean particle size 55 μm) and a carbon powder (purity not less than 99%, mean particle size 55 μm) were weighed so as to set a ratio (content) in the sintered body to that of sample No. 9, ground and then mixed, together with water, for the time shown in Table 3 to obtain a prepared raw material. Next, in the same manner as in Example 1, ceramics for decorative component made of a titanium nitride-based sintered body of samples Nos. 29 to 33 were obtained. As the spreading powder for firing, a spreading powder for firing, having the content of aluminum nitride of 95% by mass, was used in any sample.

In the decorative surface of the ceramics for decorative component, the intermetallic compound composed of nickel and either one of niobium and titanium was identified by an X-ray diffraction method. The identified composition formula is shown in Table 3.

Then, similar to Example 1, nickel, niobium, chromium and carbon contents, the arithmetic mean height Ra and color tones were measured, and evaluation was made by monitors on three aspects of quality; high-grade impression, aesthetic satisfaction and mind soothing effect, by responding to questionnaire. Using sample No. 33 as a standard sample, color difference of each sample to sample No. 33 was calculated using the above formula (A).

The results are shown in Table 3.

[Table 3]

| Sample No. | Grinding and mixing time (hours) | Composition formula of intermetallic compound | Ni (% by mass) | Nb (% by mass) | Cr (% by mass) | C (% by mass) | Mean value of arithmetic mean height Ra ($\mu$m) | Lightness index L* | Chromaticness index a* | Chromaticness index b* | Color difference ($\Delta E$*ab) | High-grate feeling (%) | Aesthetic satisfaction, (%) | Mind soothing effect (%) |
|---|---|---|---|---|---|---|---|---|---|---|---|---|---|---|
| 29 | 30 | - | 11 | 6 | 4 | 0.6 | 0.025 | 75 | 6 | 31 | 0 | 90 | 90 | 90 |
| 30 | 40 | TiNi$_3$ | 11 | 6 | 4 | 0.6 | 0.023 | 76 | 6 | 31 | 1 | 95 | 100 | 90 |
| 31 | 50 | NbNi$_3$ | 11 | 6 | 4 | 0.6 | 0.025 | 77 | 6 | 31 | 2 | 100 | 100 | 90 |
| 32 | 70 | Ti$_2$Ni | 11 | 6 | 4 | 0.6 | 0.023 | 76 | 6 | 31 | 1 | 95 | 100 | 90 |
| 33 | 110 | - | 11 | 6 | 4 | 0.6 | 0.020 | 75 | 6 | 31 | - | 90 | 90 | 90 |

As is apparent from the results shown in Table 3, since samples Nos. 30 to 32 in which an intermetallic compound composed of nickel and either one of niobium and titanium is contained in the decorative surface show large value of the lightness index L* of the decorative surface as compared with samples Nos. 29 and 33 in which the intermetallic compound is not contained in the decorative surface, the impression of noble lightness is produced. Therefore, it is apparent that higher high-grade impression and aesthetic satisfaction are provided to monitors.

[Example 3]

Tests were conducted to investigate the changes in characteristics caused by the difference in the composition of the titanium nitride powder.

First, the titanium nitride powder having the composition formula shown in Table 4 was prepared, together with other raw materials of the same composition as those used in Example 1. The raw materials were weighed so as to set a ratio (content) in the sintered body to that shown in Table 4, ground and mixed to obtain a prepared raw material. Samples Nos. 34 to 38 of the ceramics for decorative component formed from titanium nitride-based sintered bodies were obtained by the method similar to that of Example 1. As the spreading powder for firing, a spreading powder for firing, having the content of aluminum nitride of 95% by mass, was used in any sample.

Then, similar to Example 1, nickel, niobium, chromium and carbon contents, the arithmetic mean height Ra and color tones were measured, and evaluation was made by monitors on three aspects of quality; high-grade impression, aesthetic satisfaction and mind soothing effect, by responding to questionnaire. Using, as a standard sample, sample No. 37 in which all were 100% of the monitors responded positively for any of three aspects of quality; high-grade impression, aesthetic satisfaction and mind soothing effect, color difference of each sample to sample No. 37 was calculated using the above formula (A).

Furthermore, the value of atomicity x was determined when the composition formula is $TiN_x$. Specifically, after measuring the contents of oxygen and nitrogen using an oxygen-nitrogen analyzer, the titanium content was determined by subtracting the contents of oxygen and nitrogen together with the content of carbon from 100% by mass. Titanium content and nitrogen content divided by the respective atomic weights to determine the number of moles of the respective elements contained. The ratio of the number of moles of nitrogen to the number of moles of titanium (assumed to be one mole) was taken as the value of atomicity x.

The results are shown in Table 4.

[Table 4]

| Sample No. | Value atomicity x of raw material powder | Value atomicity x of sintered body | Ni (% by mass) | Nb (% by mass) | Cr (% by mass) | C (% by mass) | Mean value of arithmetic mean height Ra ($\mu$m) | Lightness index L* | Chromaticness index a* | Chromaticness index b* | Color difference ($\Delta$E*ab) | High-grade feeling (%) | Aesthetic satisfaction (%) | Mind soothing effect (%) |
|---|---|---|---|---|---|---|---|---|---|---|---|---|---|---|
| 34 | 0.58 | 0.7 | 10 | 7 | 2 | 0.7 | 0.027 | 85 | 3 | 27 | 9.1 | 80 | 80 | 80 |
| 35 | 0.70 | 0.8 | 10 | 7 | 2 | 0.7 | 0.023 | 84 | 3 | 27 | 8.4 | 90 | 100 | 90 |
| 36 | 0.83 | 0.9 | 10 | 7 | 2 | 0.7 | 0.026 | 80 | 4 | 29 | 4.1 | 100 | 100 | 90 |
| 37 | 0.90 | 0.96 | 10 | 7 | 2 | 0.7 | 0.024 | 78 | 6 | 32 | - | 100 | 100 | 100 |
| 38 | 0.95 | 1 | 10 | 7 | 2 | 0.7 | 0.020 | 71 | 8 | 34 | 7.5 | 80 | 80 | 80 |

As is apparent from Table 4, samples Nos. 35 to 37 that showed the value of atomicity x of not less than 0.8 and not more than 0.96 had enhanced color tone with luster as compared to sample No. 34 that showed the value of atomicity x of less than 0.8 and sample No. 38 that showed the value of atomicity x of more than 0.96, and thus satisfying the monitors with high-grade impression, aesthetic satisfaction and mind soothing effect.

[Example 4]

A test was conducted to investigate the changes in characteristics caused by the difference in the contents of nickel and niobium.

First, the titanium nitride powder used in sample No. 37 was prepared, together with other raw materials of the same composition as those used in Example 1. The raw materials were weighed so as to set a ratio (content) in the sintered body to that shown in Table 5, ground and mixed to obtain a prepared raw material. Samples Nos. 39 to 50 of the ceramics for decorative component formed from titanium nitride-based sintered bodies were obtained by the method similar to that of Example 2.

Then, similar to Example 1, contents of nickel, niobium, chromium and carbon, the arithmetic mean height Ra and color tones were measured, and evaluation was by monitors on three aspects of quality; high-grade impression, aesthetic satisfaction and mind soothing effect, by responding to questionnaire. Using, as a standard sample, sample No. 37 of Example 3 in which all were 100% of the monitors responded positively for any of three aspects of quality; high-grade impression, aesthetic satisfaction and mind soothing effect, color difference of each sample to sample No. 37 was calculated using the above formula (A). Furthermore, the value of atomicity x was determined by the same calculation method as in Example 2.

The results are shown in Table 5.

[Table 5]

| Sample No. | value atomicity x of TiNx | Ni (% by mass) | Nb (% by mass) | Cr (% by mass) | C (% by mass) | Mean value of arithmetic mean height Ra ($\mu$m) | Lightness index L* | Chromaticness index a* | Chromaticness index b* | Color difference ($\Delta$E*ab) | High-grade feeling (%) | Aesthetic satisfaction (%) | Mind soothing effect (%) |
|---|---|---|---|---|---|---|---|---|---|---|---|---|---|
| 39 | 0.96 | 5 | 8 | 2 | 0.7 | 0.028 | 75 | 4 | 38 | 7 | 80 | 80 | 80 |
| 40 | 0.96 | 7 | 8 | 2 | 0.7 | 0.024 | 75 | 6 | 36 | 5 | 90 | 90 | 90 |
| 41 | 0.96 | 12 | 8 | 2 | 0.7 | 0.025 | 82 | 8 | 33 | 4.6 | 90 | 90 | 90 |
| 42 | 0.96 | 14.5 | 8 | 2 | 0.7 | 0.024 | 83 | 9 | 30 | 6.2 | 90 | 90 | 90 |
| 43 | 0.96 | 17 | 8 | 2 | 0.7 | 0.025 | 84 | 11 | 28 | 8.8 | 90 | 90 | 90 |
| 44 | 0.96 | 10 | 1 | 2 | 0.7 | 0.027 | 70 | 10 | 34 | 9.2 | 80 | 80 | 80 |
| 45 | 0.96 | 10 | 2.5 | 2 | 0.7 | 0.023 | 73 | 9 | 32 | 5.8 | 90 | 90 | 80 |
| 46 | 0.96 | 10 | 3 | 2 | 0.7 | 0.021 | 77 | 6 | 30 | 2.2 | 90 | 100 | 100 |
| 47 | 0.96 | 10 | 7 | 2 | 0.7 | 0.024 | 79 | 5 | 30 | 2.4 | 90 | 90 | 100 |
| 48 | 0.96 | 10 | 8 | 2 | 0.7 | 0.022 | 81 | 4 | 30 | 4.1 | 100 | 90 | 90 |
| 49 | 0.96 | 10 | 10 | 2 | 0.7 | 0.025 | 81 | 4 | 28 | 5.4 | 90 | 90 | 90 |
| 50 | 0.96 | 10 | 13 | 2 | 0.7 | 0.022 | 81 | 2 | 25 | 8.6 | 80 | 80 | 80 |

As is apparent from Table 5, samples Nos. 40 to 42, and 45 to 49 contained nickel with concentrations of not less than 7% and not more than 14.5% by mass, and niobium with concentrations of not less than 2.5% and not more than 10% by mass, and showed the lightness index L* of not less than 72 and not more than 84, chromaticness indices a* and b* of not less than 3 and not more than 9, and not less than 27 and not more than 36, respectively. As a result, not less than 90% of the monitors responded positively evaluated high-grade impression, aesthetic satisfaction and mind soothing effect, showing that most of the monitors were satisfied.

[Example 5]

A test was conducted to investigate the changes in characteristics caused by the difference in chromium content.
First, the same raw materials as those used in Example 1 were prepared and were weighed so as to set a ratio (content) in the sintered body to that shown in Table 6, ground and mixed to obtain a prepared raw material. Samples Nos. 51 to 56 of the ceramics for decorative component formed from titanium nitride-based sintered bodies were obtained by the method similar to that of Example 2.
Then, contents of nickel, niobium, chromium and carbon, the arithmetic mean height Ra and color tones were measured similarly to Example 1. Among the corrosion resistance test specified in JIS B 7001-1995, semi-immersion in artificial sweat test was conducted (leaving to stand at 40±2°C for 24 hours). After the test, color tone was measured on each of the samples, and the differences between the values of the lightness index L* and chromaticness indices a* and b* before and after the test were calculated.
The results are shown in Table 6.
[Table 6]

| Sample No | Ni (% by | Nb (% by | Cr (% by mass) | C (% by mass) | Mean value of arithmetic mean height Ra (μm) | Lightness index L* | | | Chromaticness index a* | | | Chromaticness index b* | | |
|---|---|---|---|---|---|---|---|---|---|---|---|---|---|---|
| | | | | | | Before test | After test | Difference | Before test | After test | Difference | Before test | After test | Difference |
| 51 | 10 | 5 | 0.5 | 0.7 | 0.027 | 78 | 75.7 | 2.3 | 7.3 | 6.6 | 0.7 | 31 | 30.9 | 0.1 |
| 52 | 10 | 5 | 1.5 | 0.7 | 0.022 | 76 | 75.9 | 0.1 | 7 | 6.9 | 0.1 | 33 | 33 | 0 |
| 53 | 10 | 5 | 2.5 | 0.7 | 0.023 | 77.8 | 77.7 | 0.1 | 5.7 | 5.6 | 0.1 | 29.8 | 29.7 | 0.1 |
| 54 | 10 | 5 | 4.5 | 0.7 | 0.026 | 77.5 | 77.5 | 0 | 5.5 | 5.4 | 0.1 | 29.4 | 29.4 | 0 |
| 55 | 10 | 5 | 6.5 | 0.7 | 0.024 | 77.4 | 77.4 | 0 | 5.2 | 5.1 | 0.1 | 28.8 | 28.9 | 0.1 |
| 56 | 10 | 5 | 8 | 0.7 | 0.020 | 77 | 77 | 0 | 4 | 4 | 0 | 28 | 28 | 0 |

As is apparent from Table 6, since samples Nos. 52 to 55 contains chromium with concentrations of not less than 1.5% by mass, samples Nos. 52 to 55 showed high corrosion resistance as compared to sample No. 51 that contained chromium with concentration of less than 1.5% by mass. This is because they were improved by the dense oxide film formed on the decorative surface through reaction with oxygen contained in the air, as a result, there were little differences between the values of the lightness index L* and chromaticness indices a* and b* before and after the test.

When the chromium content exceeds 6.5% by mass, although satisfactory corrosion resistance is obtained as is apparent from the case of sample No. 56, chromaticness indices a* and b* that indicate the clearness both decrease. In order to achieve corrosion resistance and clearness at the same time, therefore, it is preferable to contain not less than 1.5% and not more than 6.5% by mass of chromium as shown in samples Nos. 52 to 55.

[Example 6]

First, the same raw materials as those used in Example 1 were prepared and were weighed so as to set a ratio (content) in the sintered body to that shown in Table 7, ground and mixed to obtain a prepared raw material. Samples Nos. 57 to 59 of the ceramics for decorative component formed from titanium nitride-based sintered bodies were obtained by the method similar to that of Example 2. Firing is always performed under an atmosphere of vacuum at vacuum degree shown in Table 7.

In the unpolished surface of the ceramics for decorative component, the intermetallic compound composed of chromium and nickel was identified by an X-ray diffraction method. The identified composition formula is shown in Table 7.

[Table 7]

| Sample No. | Vacuum degree (Pa) | Composition formula of intermetallic compound | Ni (% BY mass) | Nb (% by mass) | Cr (% by mass) | C (% by mass) |
|---|---|---|---|---|---|---|
| 57 | 1.33 | - | 11 | 6 | 4 | 0.6 |
| 58 | 1 | $Cr_2Ni_3$ | 11 | 6 | 4 | 0.6 |
| 59 | 0.8 | $Cr_2Ni_2$ | 11 | 6 | 4 | 0.6 |

As is apparent from Table 7, since samples Nos. 58 and 59 contain the intermetallic compound composed of chromium and nickel, it can be said that they are less likely to exert an influence of magnetism, compared to sample No. 57 containing no intermetallic compound composed of chromium and nickel, even when used in the decorative component for watch, the decorative component for mobile terminal and the like.

[Example 7]

A test was conducted to investigate the changes in characteristics caused by the difference in open void ratio.

First, the same raw materials as those used in Example 1 were prepared and were weighed so as to set a ratio (content) in the sintered body to that shown in Table 8, ground and mixed to obtain a prepared raw material. Sample Nos. 60 to 63 of the ceramics for decorative component formed from titanium nitride-based sintered body were obtained by the method similar to that of Example 1 before subjecting to the process of barrel polishing, while varying the duration of barrel polishing operation in order to confirm the influence of the open void ratio.

Then, the open void ratio of the decorative surface was determined by capturing an image of the decorative surface with a CCD camera under a metallurgical microscope with a magnification of 200 times, and measuring the area of open voids in one field of view, with the measuring area of one field of view in the image being set to $2.25 \times 10^{-2}$ mm$^2$ and the number of fields of view being set to 20, and calculating the ratio of the area of open voids to the total measuring area of $4.5 \times 10^{-1}$ mm$^2$, using an image analyzer (LUZEX-FS, manufactured by Nireco). Then, contents of nickel, niobium, chromium and carbon, the arithmetic mean height Ra and color tones were measured, and evaluation was made by monitors on three aspects of quality; high-grade impression, aesthetic satisfaction and mind soothing effect, by responding to questionnaire, similarly to Example 1.

The results are shown in Table 8.

[Table 8]

| Sample No. | Open void ratio (%) | Ni (% by mass) | Nb (% by mass) | Cr (% by mass) | C (% by mass) | Mean arithmetic mean height Ra ($\mu$m) | Lightness index L* | Chromaticness index a* | Chromaticness index b* | High-grade feeling (%) | Aesthetic satisfaction (%) | Mind soothing effect (%) |
|---|---|---|---|---|---|---|---|---|---|---|---|---|
| 60 | 1.1 | 9 | 8 | 2 | 0.7 | 0.023 | 78 | 6 | 32 | 100 | 100 | 100 |
| 61 | 2.0 | 9 | 8 | 2 | 0.7 | 0.026 | 77 | 6 | 31 | 100 | 100 | 90 |
| 62 | 2.5 | 9 | 8 | 2 | 0.7 | 0.026 | 76 | 5 | 30 | 100 | 100 | 90 |
| 63 | 2.9 | 9 | 8 | 2 | 0.7 | 0.027 | 74 | 5 | 31 | 80 | 80 | 80 |

As is apparent from Table 8, samples Nos. 60 to 62 that had an open void ratio of not more than 2.5% showed the lightness index L* of not less than 77 as compared to sample No. 63 that showed an open void ratio of more than 2.5%, and thus produced a color tone more favorably accepted. As a result, not less than 90% of monitors responded positively evaluated for any of high-grade impression, aesthetic satisfaction and mind soothing effect, showing that most of the monitors were satisfied.

The decorative component for watch, decorative component for mobile terminal, decorative component for daily life articles, decorative component for vehicle parts, decorative component for sports goods, decorative component for musical instrument, decorative component for accessory and decorative component for architectural member that are formed from the ceramics for decorative component of the present invention, as described above, show golden color that is highly evaluated as especially beautiful color tone, which produces high-grade impression and aesthetic satisfaction, and therefore provides mind soothing effect through visual sense, favorably.

## Claims

1. Ceramics for decorative component, comprising:

   a titanium nitride-based sintered body containing nickel, niobium, chromium and carbon, wherein
   a content of carbon on a decorative surface is not less than 0.4% by mass and not more than 0.9% by mass, and
   the decorative surface does not substantially contain aluminum.

2. The ceramics for decorative component according to claim 1, wherein a lattice constant of crystal grains of titanium nitride on the decorative surface is not less than 0.4242 nm and not more than 0.4252 nm.

3. The ceramics for decorative component according to claim 1 or 2, wherein
   an arithmetic mean height Ra of the decorative surface is not more than 0.03 $\mu$m,
   a lightness index L* of the decorative surface is not less than 72 and not more than 84 in the L*a*b* color space of CIE1976,
   a chromaticness index a* of the decorative surface is not less than 3 and not more than 9 in the L*a*b* color space of CIE1976, and
   a chromaticness index b* of the decorative surface is not less than 27 and not more than 36 in the L*a*b* color space of CIE1976.

4. The ceramics for decorative component according to any one of claims 1 to 3, wherein the titanium nitride-based sintered body contains an intermetallic compound in the decorative surface, the intermetallic compound being composed of nickel and either one of niobium and titanium.

5. The ceramics for decorative component according to any one of claims 1 to 4, wherein the titanium nitride-based sintered body satisfies $0.8 \leq x \leq 0.96$ when a composition of the titanium nitride-based sintered body is represented by $TiN_x$.

6. The ceramics for decorative component according to any one of claims 1 to 5, wherein a content of nickel is not less than 7% by mass and not more than 14.5% by mass and a content of niobium is not less than 2.5% by mass and not more than 10% by mass.

7. The ceramics for decorative component according to any one of claims 1 to 6, wherein a content of chromium is not less than 1.5% by mass and not more than 6.5% by mass.

8. The ceramics for decorative component according to any one of claims 1 to 7, wherein the titanium nitride-based sintered body contains an intermetallic compound composed of chromium and nickel.

9. A decorative component for a watch, comprising:

   the ceramics for decorative component according to any one of claims 1 to 8.

# Fig. 1

（a）

（b）

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

151

154

152

153

155

Fig. 15

160

161

162

163

164

Fig.16

170

174 a

173 a

172

174 b

173 b

171 a

175

171 b

Fig. 17

## INTERNATIONAL SEARCH REPORT

| | International application No. |
|---|---|
| | PCT/JP2010/057247 |

**A. CLASSIFICATION OF SUBJECT MATTER**
*C22C29/16*(2006.01)i, *C22C1/05*(2006.01)i

According to International Patent Classification (IPC) or to both national classification and IPC

**B. FIELDS SEARCHED**

Minimum documentation searched (classification system followed by classification symbols)
C22C29/16, C22C1/05, C04B35/58, A44C25/00

Documentation searched other than minimum documentation to the extent that such documents are included in the fields searched

| | | |
|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/111652 A1 (Kyocera Corp.), 18 September 2008 (18.09.2008), claims 1 to 9; paragraphs [0001], [0048]; tables 1 to 7 & KR 10-2009-0087124 A | 1-9 |
| A | JP 2005-179121 A (Sumitomo Metal Mining Co., Ltd.), 07 July 2005 (07.07.2005), paragraph [0022] (Family: none) | 2 |
| A | JP 60-029443 A (Kyocera Corp.), 14 February 1985 (14.02.1985), claims & US 4589917 A          & DE 3427673 A & CH 663035 A | 1-9 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July, 2010 (09.07.10) | 20 July, 2010 (20.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/057247

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-013154 A  (Kyocera Corp.),<br>15 January 2003 (15.01.2003),<br>claims<br>& CH 695421 A          & KR 10-2003-0003068 A | 1-9 |
| P,A | WO 2009/069549 A1  (Kyocera Corp.),<br>04 June 2009 (04.06.2009),<br>claims<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003013154 A
- JP 58204149 A
- JP 58204150 A
- EP 1767661 A

**Non-patent literature cited in the description**

- **Mr. Fujio ; Izumi: F. Izumi ; T. Ikeda.** *Mater. Sci. Forum,* 2000, vol. 321-324, 198